# EUROPEAN PATENT SPECIFICATION

(11) **EP 4 492 762 B1**
(45) Date of publication and mention of the grant of the patent: **29.07.2026**
(21) Application number: 24773911.3
(22) Date of filing: 05.03.2024
(51) Int. Cl.: H04M 1/02, G06F 1/16, F16C 11/04

(54) **FOLDABLE ELECTRONIC DEVICE, SCREEN BEARING MEMBER, AND FLEXIBLE SCREEN ASSEMBLY**
FALTBARE ELEKTRONISCHE VORRICHTUNG, BILDSCHIRMLAGERELEMENT UND FLEXIBLE BILDSCHIRMANORDNUNG
DISPOSITIF ÉLECTRONIQUE PLIABLE, ÉLÉMENT DE SUPPORT D'ÉCRAN ET ENSEMBLE ÉCRAN FLEXIBLE

(30) Priority: 22.03.2023 CN 202310325692
(43) Date of publication of application: 15.01.2025
(73) Proprietor: Huawei Technologies Co., Ltd., Shenzhen, Guangdong 518129 (CN)
(72) Inventor: LIAO, Li, Shenzhen, Guangdong 518129 (CN); WU, Wenwen, Shenzhen, Guangdong 518129 (CN); ZHONG, Ding, Shenzhen, Guangdong 518129 (CN); ZOU, Chun, Shenzhen, Guangdong 518129 (CN)
(74) Representative: Maiwald GmbH
(86) International application number: PCT/CN2024/080131
(87) International publication number: WO 2024/193343

(56) References cited:
- WO-A1-2022/257904
- CN-A- 113 067 926
- CN-A- 113 889 011
- CN-A- 113 915 228
- CN-A- 114 401 328
- US-A1- 2022 159 845

## Description

### TECHNICAL FIELD

This application relates to the terminal field, and in particular, to a foldable electronic device, a screen holder, and a flexible screen assembly.

### BACKGROUND

With development of science and technology, foldable electronic devices are to become a mainstream direction in the next few years. The following describes one of the foldable electronic devices with reference to the accompanying drawings.

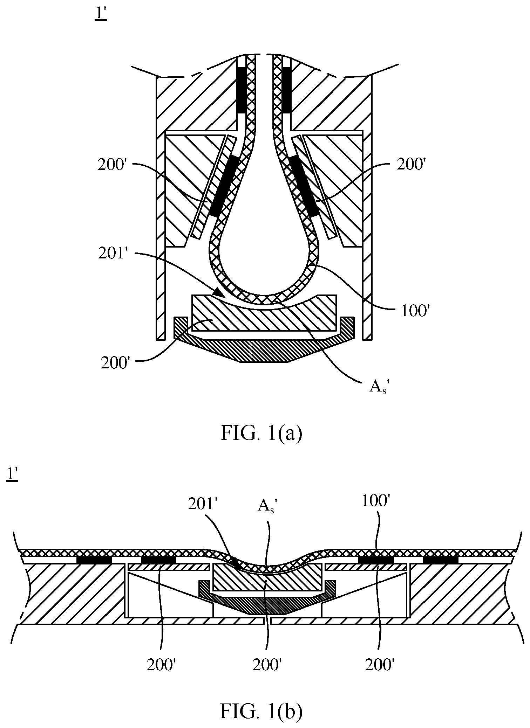

FIG. 1(a) is a sectional view of an electronic device 1' in a folded state in some technical solutions. FIG. 1(b) is a sectional view of the electronic device 1' in an unfolded state in some technical solutions. With reference to FIG. 1(a) and FIG. 1(b), it can be learned that the electronic device 1' is a foldable electronic device, and can be switched between the unfolded state and the folded state. The electronic device 1' includes a flexible screen 100' and a hinge assembly 200' that are stacked. The flexible screen 100' includes a deformation area As'. The flexible screen 100' is formed by stacking a plurality of layers of materials, and the plurality of layers of materials may be elastically deformed (for example, compressed or stretched) at the deformation area As'. A part that is on the hinge assembly 200' and that corresponds to the deformation area As' may include a main shaft module (not shown in the figure) and a door plate corresponding to the main shaft module. A side that is of the door plate corresponding to the main shaft module and that faces the flexible screen 100' is provided with an avoidance slot 201' facing the deformation area As'.

In the folded state, the hinge assembly 200' encloses accommodating space, and at least a part of the flexible screen 100' is bent into a specific shape (for example, a water drop shape) and is accommodated in the accommodating space. The deformation area As' in the specific shape is located in the avoidance slot 201' in the hinge assembly 200'. Length creep occurs in a material in the deformation area As': A material close to the hinge assembly 200' is stretched to be longer, and a material away from the hinge assembly 200' is compressed to be shorter.

However, in a case in which the electronic device 1' is bent for a long time (for example, bending time is long or a quantity of bending times is large), when the electronic device 1' is switched from the folded state to the unfolded state, the length creep in the deformation area As' cannot be quickly recovered. Under light radiation, obvious light shadows and creases are formed in the deformation area As' of the flexible screen 100'. In view of this, how to quickly recover the length creep in the deformation area As' of the flexible screen 100' becomes an urgent technical problem to be resolved.
Document US 2022/159845 A1 discloses a foldable display device.

### SUMMARY

The present invention is defined by the appended claims. In the following, aspects and/or implementations not covered by the appended claims are for increasing understandability of the present invention. In view of this, this application provides a foldable electronic device, a screen holder, and a flexible screen assembly. The electronic device includes a flexible screen, a hinge assembly (a part of a support mechanism), and a screen holder. The flexible screen includes a deformation area. A door plate corresponding to a main shaft module is provided with an avoidance slot facing the flexible screen. The screen holder includes a holding plate and a holding part. In an unfolded state, the hinge assembly, the holding plate, and the flexible screen are sequentially stacked, and the holding part is at least partially filled between the holding plate and the door plate corresponding to the main shaft module in the avoidance slot. In a folded state, the holding part slides out of the avoidance slot, so that the deformation area of the flexible screen in the folded state can enter the avoidance slot. According to the electronic device, in the folded state, the holding part slides out of the avoidance slot to increase available space in the avoidance slot, so that the deformation area of the flexible screen enters the avoidance slot. In the unfolded state, the holding part is located in the avoidance slot, so that when a user touches the deformation area of the flexible screen, a sense of virtual position is weakened, and damage to the flexible screen caused by extrusion by a sharp foreign object and impact on the deformation area is weakened.

According to a first aspect of this application, a foldable electronic device is provided, where the electronic device is capable of being switched between a folded state and an unfolded state. The electronic device includes a flexible screen, a support mechanism, and a first screen holder.

The flexible screen includes a first part, a second part, and a third part that are sequentially connected, and in the folded state, the first part and the third part are disposed opposite to each other. The support mechanism and the flexible screen are stacked. The support mechanism includes a first support structure, a second support structure, and a third support structure. The first support structure is disposed opposite to and fastened to the first part, the second support structure is disposed opposite to the second part, the third support structure is disposed opposite to and fastened to the third part, and the second support structure is provided with an avoidance slot facing the second part. The first screen holder is located between the flexible screen and the support mechanism. The first screen holder includes a first holding plate and a first holding part. The first holding part is located on a side that is of the first holding plate and that backs on the flexible screen. The first holding plate includes a first end away from the second support structure, and the first end of the first holding plate is connected to the first part and/or the first support structure. In the unfolded state, the first holding part is located in the avoidance slot to support the second part. In the folded state, the first holding part is at least partially located outside the avoidance slot, so that the second part is at least partially located in the avoidance slot.

In the flexible screen, the second part corresponds to the deformation area of the flexible screen in the folded state. The support mechanism is a structure that can be used to support the flexible screen and the first screen holder. The support mechanism includes a first support structure, a second support structure, and a third support structure. The first support structure is opposite to the first part, the second support structure is opposite to the second part, and the third support structure is opposite to the third part. For example, the second support structure includes a main shaft module and a door plate (namely, a second door plate in the following) corresponding to the main shaft module. The second support structure is provided with an avoidance slot facing the second part, that is, the second door plate (namely, the door plate corresponding to the main shaft module) in the second support structure is provided with an avoidance slot facing the second part.

That is, in an implementation of this application, the door plate corresponding to the main shaft module is provided with an avoidance slot facing the flexible screen, and the screen holder includes a first holding plate and a first holding part. In the unfolded state, the hinge assembly, the first holding plate, and the flexible screen are sequentially stacked, and the first holding part is at least partially filled between the first holding plate and the door plate corresponding to the main shaft module in the avoidance slot. In the folded state, the first holding part slides out of the avoidance slot, so that the deformation area of the flexible screen in the folded state can enter the avoidance slot.

In the foregoing electronic device, the first screen holder is disposed between the support mechanism and the flexible screen. The first screen holder includes a first holding plate and a first holding part disposed on a side that is of the first holding plate and that backs on the flexible screen. The first holding part is disposed on the first holding plate. In this case, in the folded state, the first holding part slides out of the avoidance slot to increase available space in the avoidance slot, so that the deformation area of the flexible screen enters the avoidance slot. In the unfolded state, the first holding part is located in the avoidance slot, so that when a user touches the deformation area of the flexible screen, a sense of virtual position is weakened, and damage to the flexible screen caused by extrusion by a sharp foreign object and impact on the deformation area is weakened.

In some possible implementations of the first aspect, the electronic device further includes a second screen holder. The second screen holder is located between the flexible screen and the support mechanism. The second screen holder includes a second holding plate and a second holding part. The second holding part is located on a side that is of the second holding plate and that backs on the flexible screen. The second holding plate includes a third end away from the second support structure, and the third end of the second holding plate is connected to the third part and/or the third support structure. In the unfolded state, the second holding part is located in the avoidance slot to support the second part. In the folded state, the second holding part is at least partially located outside the avoidance slot, so that the second part is at least partially located in the avoidance slot.

It may be understood that, in this application, the second screen holder and the first screen holder are basically symmetrical except for adaptive adjustment of some structures. Therefore, for a specific structure and a mounting manner of the second screen holder, refer to the first screen holder. Details are not described herein again.

In some possible implementations of the first aspect, in the flexible screen of the electronic device, the first part includes a first sub-part and a second sub-part, and the first sub-part, the second sub-part, and the second part are sequentially connected. In the support mechanism of the electronic device, the first support structure includes a first housing and a first door plate that are rotatably connected. The first housing is disposed opposite to and fastened to the first sub-part, and the first door plate is disposed opposite to the second sub-part. The second support structure includes a second door plate and a main shaft module that backs on a surface of the second door plate. The first support structure and the second support structure are switched between the folded state and the unfolded state via the main shaft module, and the second door plate is provided with an avoidance slot facing the second part. The first end of the first holding plate is connected to at least one of the first sub-part, the second sub-part, the first housing, and the first door plate.

In some implementations, the first end of the first holding plate is located between the second sub-part and the first door plate, and the first end of the first holding plate is connected to the second sub-part and/or the first door plate.

In some implementations, the first end of the first holding plate is located between the first sub-part and the first housing, and the first end of the first holding plate is connected to the first sub-part and/or the first housing.

In some implementations, the first end of the first holding plate is located between the first sub-part and the first housing, and the first end of the first holding plate is connected to the first sub-part and/or the first housing, and/or the first holding plate is connected to the second sub-part and/or the first door plate.

It may be understood that the foregoing manner of connecting the first end of the first holding plate to the support mechanism is merely a part of an example of an implementation in this application, and another implementation in which the first end of the first holding plate can be fastened to the support mechanism also falls within the protection scope of this application. This is not specifically limited in this application.

In the foregoing electronic device, the first end of the first holding plate is a fixed end, and a solution for connecting the first holding plate to another surrounding component may be flexibly selected based on a size and a layout position of the first holding plate, so that design difficulty and assembly difficulty of the first screen holder in the electronic device are reduced.

In some possible implementations of the first aspect, the third part includes a third sub-part and a fourth sub-part, and the third sub-part, the fourth sub-part, and the second part are sequentially connected. In the support mechanism of the electronic device, the third support structure includes a second housing and a third door plate that are rotatably connected. The second housing is disposed opposite to and fastened to the third sub-part, and the third door plate is disposed opposite to the fourth sub-part. The second support structure includes a second door plate and a main shaft module that backs on a surface of the second door plate. The first support structure and the second support structure are switched between the folded state and the unfolded state via the main shaft module, and the second door plate is provided with an avoidance slot facing the second part. The third end of the second holding plate is connected to at least one of the third sub-part, the fourth sub-part, the second housing, and the third door plate.

That is, in an implementation of this application, the support mechanism includes a first housing, a second housing, a first door plate, a second door plate, a third door plate, and a main shaft module. In the unfolded state, the first door plate, the second door plate, and the third door plate are sequentially distributed. In the folded state, the first door plate, the second door plate, and the third door plate jointly enclose accommodating space, and at least the flexible screen is bent into a specific shape (for example, a water drop shape) and is accommodated in the accommodating space. It is not difficult to understand that, in the support mechanism, the first support structure may include the first housing and the first door plate, the second support structure may include the main shaft module and the second door plate, and the third support structure may include the second housing and the third door plate.

In some possible implementations of the first aspect, a second end that is of the first holding plate and that is opposite to the first end is a free end and is located between the second part and the second support structure, and the first holding part is mounted on the second end.

In some possible implementations of the first aspect, a fourth end that is of the second holding plate and that is opposite to the third end is a free end and is located between the second part and the second support structure, and the second holding part is mounted on the fourth end.

In some possible implementations of the first aspect, in the folded state, the second part and the second support structure are spaced from each other.

For example, the electronic device includes a first screen holder. The first screen holder is located on a side of a central plane and is spaced from the central plane. The central plane is perpendicular to the main shaft module, and is perpendicular to a distribution plane (namely, a projection plane) of the flexible screen in the unfolded state. In the folded state, the first screen holder and the second door plate form release space, and the bent second part is located in the release space.

For another example, the electronic device includes a first screen holder and a second screen holder. The first screen holder and the second screen holder are respectively located on two sides of a central plane, and are spaced from the central plane. In the folded state, the first screen holder, the second screen holder, and the second door plate form release space, and the bent second part is located in the release space.

In the foregoing electronic device, in the folded state, a structure/structures of the first screen holder and/or the second screen holder is/are properly designed, so that release space is formed between the first screen holder and/or the second screen holder and the second door plate, and the bent second part is located in the release space. In view of this, stress between the flexible screen and the first screen holder and/or the second screen holder can be reduced, pressure of the first screen holder and/or the second screen holder on the second part of the flexible screen is weakened, and layering and misplacement of the flexible screen are avoided.

In some possible implementations of the first aspect, the electronic device includes a first screen holder. In the unfolded state, the second end is attached to the flexible screen, and in the folded state, the second end is separated from the flexible screen.

That is, in an implementation of this application, in the folded state, the second end is separated from the flexible screen to release space between the second part and the first screen holder, so that stress between the flexible screen and the second end is reduced, pressure of the second end on the second part in the flexible screen is weakened, and layering and misplacement of the flexible screen are avoided.

In addition, in the foregoing electronic device, when spacing between the second end of the first holding plate and the central plane is small, the second end is separated from the flexible screen to form release space. This expands a size selection range of the first holding plate, reduces design difficulty of the first holding plate, and ensures that the first screen holder is in lap joint with a slot opening of the avoidance slot in the folded state, thereby improving running stability of the electronic device.

In some possible implementations of the first aspect, the electronic device further includes a second screen holder. In the unfolded state, the fourth end is attached to the flexible screen, and in the folded state, the fourth end is separated from the flexible screen.

In some possible implementations of the first aspect, the electronic device includes a first screen holder, and in the folded state, the first screen holder is partially in lap joint with a slot opening of the avoidance slot.

In the foregoing electronic device, a structure of the first screen holder is properly designed, so that it can be ensured that the first screen holder does not completely fall out of the avoidance slot in the folded state. This helps limit a sliding direction of the first screen holder relative to a slot surface of the avoidance slot when the folded state is switched back to the unfolded state.

In some possible implementations of the first aspect, the electronic device includes a second screen holder, and in the folded state, the second screen holder is partially in lap joint with a slot opening of the avoidance slot.

In some possible implementations of the first aspect, the electronic device includes a first screen holder, and in the unfolded state, an orthographic projection of the first holding part on a plane on which the flexible screen is located partially overlaps an orthographic projection of the avoidance slot on a distribution plane of the flexible screen.

In some possible implementations of the first aspect, the electronic device includes a second screen holder, and in the unfolded state, an orthographic projection of the second holding part on a plane on which the flexible screen is located partially overlaps an orthographic projection of the avoidance slot on a distribution plane of the flexible screen.

In some possible implementations of the first aspect, the electronic device includes a first screen holder, a second end that is of the first holding plate and that is opposite to the first end is a free end and is located between the third part and the third door plate, and the first holding part is mounted between the first end and the second end.

According to the foregoing electronic device, a quantity of screen holders is reduced, to help improve assembly efficiency and assembly precision of the electronic device.

In some possible implementations of the first aspect, in the folded state, the second end of the first holding plate is still located between the third part and the third door plate, and is a free end.

In some possible implementations of the first aspect, the electronic device includes a first screen holder, and a side that is of a first holding part and that backs on a first holding plate is provided with a guide surface. When the electronic device is switched between the unfolded state and the folded state, the guide surface cooperates with a slot surface of the avoidance slot, to limit a direction in which the first holding part enters and/or falls out of the avoidance slot.

By designing the guide surface, the electronic device can optimize friction between internal components of the electronic device during switching between the unfolded state and the folded state, and reduce jitter in a switching process, thereby improving stability of the electronic device during switching between the unfolded state and the folded state.

In some possible implementations of the first aspect, the electronic device further includes a second screen holder, and a side that is of a second holding part and that backs on a second holding plate is provided with a guide surface. When the electronic device is switched between the unfolded state and the folded state, the guide surface cooperates with a slot surface of the avoidance slot, to limit a direction in which the second holding part enters and/or falls out of the avoidance slot.

In some possible implementations of the first aspect, the electronic device includes a first screen holder, and in the unfolded state, a surface that is of a first holding part and that faces the avoidance slot is at least partially attached to the slot surface of the avoidance slot.

According to the foregoing electronic device, a guide function of the guide surface may be optimized by properly designing the guide surface, and jitter of the electronic device during switching between the unfolded state and the folded state is reduced, to help improve stability of the electronic device during switching between the unfolded state and the folded state.

In some possible implementations of the first aspect, the electronic device further includes a second screen holder, and in the unfolded state, a surface that is of a second holding part and that faces the avoidance slot is at least partially attached to the slot surface of the avoidance slot.

In some possible implementations of the first aspect, the electronic device includes a first screen holder, and a cross section that is of a first holding part and that is perpendicular to the main shaft module is sector-shaped and/or rectangular.

In some possible implementations of the first aspect, the electronic device includes a second screen holder, and a cross section that is of a second holding part and that is perpendicular to the main shaft module is sector-shaped and/or rectangular.

In some possible implementations of the first aspect, the electronic device includes a first screen holder, a first holding plate and a first holding part are integrally formed, and a material of each of the first holding plate and the first holding part includes at least one of metal, resin, and fiber.

In some possible implementations of the first aspect, the electronic device further includes a second screen holder, a second holding plate and a second holding part are integrally formed, and a material of each of the second holding plate and the second holding part includes at least one of metal, resin, and fiber.

In some possible implementations of the first aspect, the electronic device includes a first screen holder, a first holding plate and a first holding part are separately formed and fastened to each other, a material of the first holding plate includes at least one of metal, resin, and fiber, and a material of the first holding part includes at least one of metal, resin, and fiber.

In some implementations, the first holding plate and the first holding part in the first screen holder may be made of a same material. For example, materials of the first holding plate and the first holding part are both metal.

In some implementations, two or more materials are properly selected for the first holding plate and the first holding part based on different yield strength and abrasion resistance requirements, and the two or more materials are superimposed to form the first screen holder. For example, a material of the first holding plate is plastic, and a material of the first holding plate is metal.

In some implementations, the first holding plate and the first holding part may be assembled through at least one of bonding, welding, and fastening. This is not specifically limited in this application.

In some possible implementations of the first aspect, the electronic device further includes a second screen holder, a second holding plate and a first holding part are separately formed and fastened to each other, a material of the first holding plate includes at least one of metal, resin, and fiber, and a material of the first holding part includes at least one of metal, resin, and fiber.

In some possible implementations of the first aspect, the electronic device further includes a towing component, where one end of the towing component is connected to the first end of the first holding plate, the other end of the towing component is connected to the first support structure, and the towing component is configured to tow the first holding part into the avoidance slot when the electronic device is switched from the folded state to the unfolded state.

In some possible implementations of the first aspect, the electronic device further includes a second screen holder, and there are two groups of towing components. One group of towing components is configured to tow the first holding part into the avoidance slot when the electronic device is switched from the folded state to the unfolded state, and the other group of towing components is configured to tow the second holding part into the avoidance slot when the electronic device is switched from the folded state to the unfolded state. In this implementation, for a specific connection manner of the towing component, refer to the connection manner in the foregoing implementation. Details are not described again.

According to a second aspect of this application, a screen holder is provided. The screen holder includes a holding plate and a holding part that are connected to each other, the holding part is located on a side that is of the holding plate and that backs on a flexible screen, in an unfolded state, the holding part is located in an avoidance slot of a support mechanism in an electronic device to support a second part of the flexible screen, and in a folded state, the holding part is at least partially located outside the avoidance slot, so that the second part is at least partially located in the avoidance slot.

It may be understood that the screen holder in the second aspect of this application may be any screen holder in the first aspect and the implementations of the first aspect, that is, may be any first screen holder, any second screen holder, or a combination thereof.

According to a third aspect of this application, a flexible screen assembly is provided, where the flexible screen assembly can be switched between a folded state and an unfolded state. The flexible screen assembly includes a flexible screen and a first screen holder. The flexible screen includes a first part, a second part, and a third part that are sequentially connected, and the first part and the third part are disposed opposite to each other in a folded state. The first part is configured to be opposite to a first support structure, the second part is configured to be opposite to a second support structure, and the second support structure is provided with an avoidance slot facing the second part. The first screen holder is located on a side of the flexible screen, the first screen holder includes a first holding plate and a first holding part, the first holding part is located on a side that is of the first holding plate and that backs on the flexible screen, and a first end of the first holding plate is connected to the first part and/or the first support structure. In the unfolded state, the first holding part is located in the avoidance slot to support the second part. In the folded state, the first holding part is at least partially located outside the avoidance slot, so that the second part is at least partially located in the avoidance slot of a support mechanism of an electronic device.

In some possible implementations of the third aspect, the third part is configured to be opposite to a third support structure, and the flexible screen assembly further includes a second screen holder. The second screen holder is located on a side of the flexible screen, and the second screen holder includes a second holding plate and a second holding part. The second holding part is located on a side that is of the second holding plate and that backs on the flexible screen, and a third end of the second holding plate is connected to the third part and/or the third support structure. In the unfolded state, the second holding part is located in the avoidance slot to support the second part. In the folded state, the second holding part is at least partially located outside the avoidance slot, so that the second part is at least partially located in the avoidance slot of the support mechanism of the electronic device.

### BRIEF DESCRIPTION OF DRAWINGS

FIG. 1(a) is a sectional view of an electronic device 1' in a folded state in some technical solutions;
FIG. 1(b) is a sectional view of an electronic device 1' in an unfolded state in some technical solutions;
FIG. 2(a) is a sectional view of an electronic device 1" in a folded state according to some embodiments of this application;
FIG. 2(b) is a sectional view of an electronic device 1" in an unfolded state according to some embodiments of this application;
FIG. 3(a) is a sectional view of an electronic device 1 in a folded state according to some embodiments of this application;
FIG. 3(b) is a sectional view of an electronic device 1 in an unfolded state according to some embodiments of this application;
FIG. 4 is an exploded view of an electronic device 1 according to some embodiments of this application;
FIG. 5 is a top view of an electronic device 1 in an unfolded state according to some embodiments of this application;
FIG. 6 is a partially enlarged view of an area in which a screen holder is located after an electronic device 1 is cut along an M-M section in FIG. 5 according to some embodiments of this application;
FIG. 7 is a three-dimensional diagram of an electronic device 1 in a folded state according to some embodiments of this application;
FIG. 8 is a partially enlarged view of an area in which a screen holder is located after an electronic device 1 is cut along an N-N section in FIG. 7 according to some embodiments of this application;
FIG. 9 is an exploded view of a hinge assembly 200 in an electronic device 1 according to some embodiments of this application;
FIG. 10(a) is a side view of a first screen holder 300 according to some embodiments of this application;
FIG. 10(b) is a side view of a first screen holder 300 according to some embodiments of this application;
FIG. 11(a) is a side view of a first screen holder 300a according to some embodiments of this application;
FIG. 11(b) is a side view of a first screen holder 300a according to some embodiments of this application;
FIG. 12(a) is a sectional view of an electronic device 1a in an unfolded state according to some embodiments of this application;
FIG. 12(b) is a sectional view of an electronic device 1a in a folded state according to some embodiments of this application;
FIG. 13(a) is a side view of a first screen holder 300b according to some embodiments of this application;
FIG. 13(b) is a side view of a first screen holder 300b according to some embodiments of this application;
FIG. 14(a) is a sectional view of an electronic device 1b in an unfolded state according to some embodiments of this application;
FIG. 14(b) is a sectional view of an electronic device 1b in a folded state according to some embodiments of this application;
FIG. 15(a) is a sectional view of an electronic device 1c in an unfolded state according to some embodiments of this application;
FIG. 15(b) is a sectional view of an electronic device 1d in an unfolded state according to some embodiments of this application;
FIG. 16(a) is a diagram of a relative position relationship between a first screen holder 300, a second screen holder 400, and an avoidance slot 201 according to some embodiments of this application;
FIG. 16(b) is a diagram of a relative position relationship between a first screen holder 300, a second screen holder 400, and an avoidance slot 201 according to some other embodiments of this application;
FIG. 16(c) is a diagram of a relative position relationship between a first screen holder 300, a second screen holder 400, and an avoidance slot 201 according to some other embodiments of this application;
FIG. 17 is a side view of a first screen holder 300e according to some embodiments of this application;
FIG. 18(a) is a sectional view of an electronic device 1e in an unfolded state according to some embodiments of this application;
FIG. 18(b) is a sectional view of an electronic device 1e in a folded state according to some embodiments of this application;
FIG. 19 is a side view of a first screen holder 300f according to some embodiments of this application;
FIG. 20(a) is a sectional view of an electronic device 1f in an unfolded state according to some embodiments of this application; and
FIG. 20(b) is a sectional view of an electronic device 1f in a folded state according to some embodiments of this application.

Reference numerals:
1': electronic device;
100': flexible screen; As': deformation area;
200': hinge assembly; 201': avoidance slot;
1": electronic device;
100": flexible screen; As": deformation area;
200": hinge assembly; 201": avoidance slot;
300": screen holder;
1: electronic device; 1a: electronic device; 1b: electronic device; 1c: electronic device; 1d: electronic device; 1e: electronic device; 1f: electronic device;
100: flexible screen; 110: first part; 120: second part; 130: third part;
200: hinge assembly; 201: avoidance slot;
210: first door plate;
220: second door plate;
230: third door plate;
240: main shaft module; 250: first bracket; 260: second bracket; 270: synchronous structure; 271: synchronous wheel; 272: first synchronous arm; 273: second synchronous arm; 280: cover;
300: first screen holder;
310: first holding plate; 311: first end; 312: second end;
320: first holding part; 321: guide surface; 3211: first guide surface; 3212: second guide surface;
300a: first screen holder;
310a: first holding plate; 311a: first end; 312a: second end;
320a: first holding part; 321a: guide surface; 3211a: first guide surface; 3212a: second guide surface;
300b: first screen holder;
310b: first holding plate; 311b: first end; 312b: second end;
320b: first holding part; 321b: guide surface;
300c: first screen holder;
310c: first holding plate;
320c: first holding part;
300d: first screen holder;
310d: first holding plate;
320d: first holding part;
300e: first screen holder;
310e: first holding plate; 311e: first end; 312e: second end;
320e: first holding part; 321e: guide surface; 3211e: first guide surface; 3212e: second guide surface;
300f: first screen holder;
310f: first holding plate; 311f: first end; 312f: second end;
320f: first holding part; 321f: guide surface;
400: second screen holder;
410: second holding plate; 411: third end; 412: fourth end;
420: second holding part;
400a: second screen holder;
410a: second holding plate;
420a: second holding part;
400b: second screen holder;
410b: second holding plate;
420b: second holding part;
500: first housing; and
600: second housing.

### DESCRIPTION OF EMBODIMENTS

To make the objectives, technical solutions, and advantages of this application clearer, the following further describes the implementations of this application in detail with reference to the accompanying drawings.

This application provides an electronic device. The electronic device includes but is not limited to any one of foldable electronic products such as a mobile phone, a tablet computer, a notebook computer, and a wearable device. In a folded state, a shape obtained by bending a flexible screen in the electronic device includes but is not limited to any one of a water drop shape, a mallet shape, and a spoon shape.

The following uses an example in which the electronic device is a mobile phone, and when the electronic device is in a folded state, the flexible screen is bent into a water drop shape for description. To facilitate the following description, a plane on which the flexible screen is located in an unfolded state is defined as a projection plane.

In addition, in this application, a state in which a screen holder, a flexible screen assembly, and the electronic device are folded may be referred to as a folded state, and a state in which the screen holder, the flexible screen assembly, and the electronic device are unfolded may be referred to as an unfolded state.

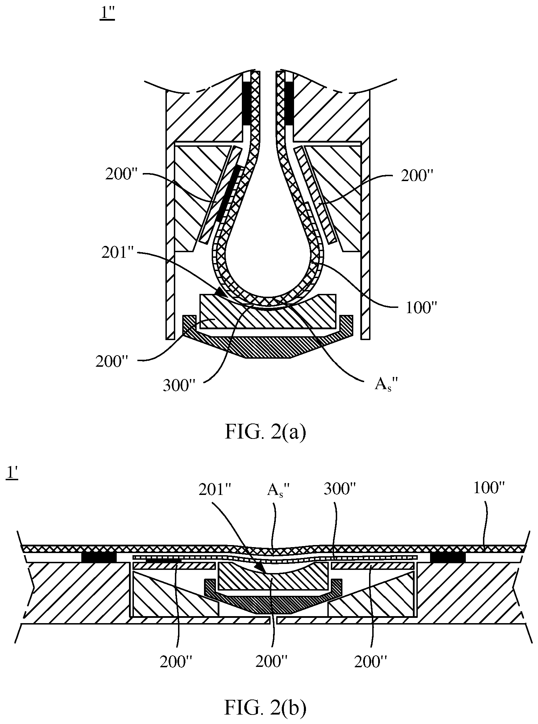

FIG. 2(a) is a sectional view of an electronic device 1" in a folded state according to some embodiments of this application. FIG. 2(b) is a sectional view of an electronic device 1" in an unfolded state according to some embodiments of this application.

With reference to FIG. 2(a) and FIG. 2(b), it is not difficult to find that the electronic device 1" is a foldable electronic device, and can be switched between the unfolded state and the folded state. The electronic device 1" includes a flexible screen 100", a hinge assembly 200", and a screen holder 300". The flexible screen 100" and the hinge assembly 200" are stacked, and the screen holder 300" is located between the flexible screen 100" and the hinge assembly 200". The flexible screen 100" includes a deformation area As". A part that is on the hinge assembly 200" and that corresponds to the deformation area As" may include a main shaft module (not shown in the figure) and a door plate corresponding to the main shaft module. The door plate corresponding to the main shaft module is provided with an avoidance slot 201" facing the deformation area As". In the unfolded state, the screen holder 300" is a plate-shaped structure parallel to a projection plane, and an orthographic projection of the deformation area As" on the projection plane is located in an orthographic projection of the screen holder 300" on the projection plane.

In the folded state, the hinge assembly 200" encloses accommodating space, and the flexible screen 100" and the screen holder 300" are bent into a specific shape (for example, a water drop shape) and are accommodated in the accommodating space. The deformation area As" in the specific shape and the screen holder 300" corresponding to the deformation area As" in position are located in the avoidance slot 201" in the door plate corresponding to the main shaft module.

When the electronic device 1" is switched from the folded state to the unfolded state, the screen holder 300" is synchronously unfolded and is elastically recovered to a plate-shaped structure, to push the deformation area As" of the flexible screen 100" to move out of the avoidance slot 201" in a vertical direction of the projection plane.

However, because the door plate corresponding to the main shaft module is provided with the avoidance slot 201", in the unfolded state, there is a dent-shaped gap between the screen holder 300" and the door plate corresponding to the main shaft module. Therefore, when a user touches the deformation area As" of the flexible screen 100", a sense of virtual position is obvious. In addition, when a sharp foreign object extrudes and impacts the deformation area As" of the flexible screen 100", the flexible screen 100" is easily damaged.

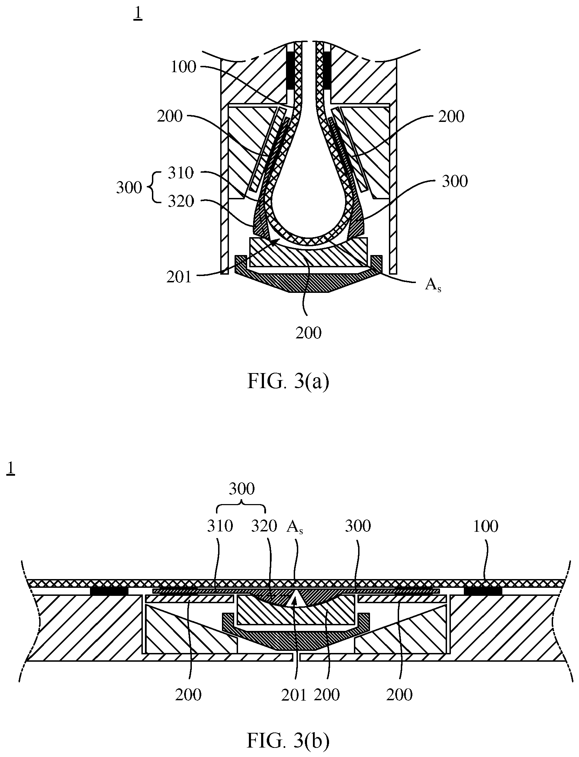

To resolve a problem that there is a dent-shaped gap between the screen holder and the door plate corresponding to the main shaft module in the unfolded state in the foregoing embodiment, this application provides an electronic device 1. FIG. 3(a) is a sectional view of the electronic device 1 in a folded state according to some embodiments of this application. FIG. 3(b) is a sectional view of the electronic device 1 in an unfolded state according to some embodiments of this application. With reference to FIG. 3(a) and FIG. 3(b), it can be learned that the electronic device 1 is a foldable electronic device. The electronic device 1 includes a flexible screen 100, a hinge assembly 200, and a screen holder 300. The flexible screen 100 includes a deformation area As. A part that is on the hinge assembly 200 and that corresponds to the deformation area As may include a main shaft module and a door plate corresponding to the main shaft module. It may be understood that an area in which the deformation area As is located on the flexible screen 100, an orthographic projection area of the main shaft module on the flexible screen 100, and an orthographic projection area of the door plate corresponding to the main shaft module on the flexible screen 100 correspond to each other. That two or more orthographic projections correspond to each other means that the two or more orthographic projections basically overlap. The door plate corresponding to the main shaft module is provided with an avoidance slot 201 facing the flexible screen 100. The screen holder 300 includes a first holding plate 310 and a first holding part 320. In the unfolded state, the hinge assembly 200, the first holding plate 310, and the flexible screen 100 are sequentially stacked, and the first holding part 320 is at least partially filled between the first holding plate 310 and the door plate corresponding to the main shaft module in the avoidance slot 201. In the folded state, the first holding part 320 slides out of the avoidance slot 201, so that the deformation area As of the flexible screen 100 in the folded state can enter the avoidance slot 201.

In the electronic device, the first holding plate 310 is provided with the first holding part 320. In the folded state, the first holding part 320 slides out of the avoidance slot 201, to increase available space in the avoidance slot 201, so that the deformation area As of the flexible screen 100 enters the avoidance slot 201. In the unfolded state, the first holding part 320 is located in the avoidance slot 201, so that when a user touches the deformation area As of the flexible screen 100, a sense of virtual position is weakened, and damage to the flexible screen 100 caused by extrusion by a sharp foreign object and impact on the deformation area is weakened.

In this application, the electronic device is a foldable electronic device, and can be switched between the folded state and the unfolded state. It should be noted that when the electronic device is in the unfolded state, all components in the electronic device may be in the unfolded state, and when the electronic device is in the folded state, all components in the electronic device may be in the folded state. In addition, the electronic device may alternatively be in an intermediate state between the unfolded state and the folded state, where the intermediate state may be any state between the unfolded state and the folded state.

It is not difficult to find that the electronic device provided in this application includes a flexible screen, a support mechanism, and a first screen holder. The flexible screen includes a first part, a second part, and a third part that are sequentially connected. In the unfolded state, the first part, the second part, and the third part are sequentially disposed in a direction. In the folded state, the first part and the second part are disposed opposite to each other, and the second part is in a bent state. The support mechanism includes a first support structure, a second support structure, and a third support structure. The first screen holder includes a first holding plate and a first holding part.

The flexible screen, the first holding plate, and the support mechanism are sequentially stacked. The first support structure is disposed opposite to and fastened to the first part, the second support structure is disposed opposite to the second part, and the third support structure is disposed opposite to and fastened to the third part. An avoidance slot facing the second part is provided on the second support structure. The first holding part is located on a side that is of the first holding plate and that backs on the flexible screen. The first holding plate includes a first end away from the second support structure, and the first end of the first holding plate is connected to the first part and/or the first support structure.

In the unfolded state, an orthographic projection of the first holding plate on a projection plane is at least partially located in an orthographic projection of the avoidance slot on the projection plane, and the first holding part is located in the avoidance slot to support the second part in the flexible screen. In the folded state, the first holding part is at least partially located outside the avoidance slot, so that the second part is at least partially located in the avoidance slot.

In the electronic device in this application, the first screen holder is of a non-equal-thickness structure (for example, a thickness of a part in which the first holding part is located is greater than a thickness of another part), to implement variable adjustment of a gap between the first screen holder and the support mechanism in an unfolded state and a closed state, so that in the unfolded state, the first screen holder can support the second part in the flexible screen, and in the folded state, the first screen holder avoids the support mechanism to form accommodating space, to accommodate the bent second part. This optimizes light shadows and creases and reliability of the flexible screen in the electronic device.

In some embodiments, in the flexible screen, the first part includes a first sub-part and a second sub-part, and the first sub-part, the second sub-part, and the second part are sequentially connected. Similarly, the third part includes a third sub-part and a fourth sub-part, and the third sub-part, the fourth sub-part, and the second part are sequentially connected. In the support mechanism, the first support structure includes a first housing and a first door plate that are rotatably connected. The first housing is disposed opposite to and fastened to the first sub-part, and the first door plate is disposed opposite to the second sub-part. Similarly, the third support structure includes a second housing and a third door plate that are rotatably connected. The second housing is disposed opposite to and fastened to the third sub-part, and the third door plate is disposed opposite to the fourth sub-part. The second support structure includes a main shaft module and a second door plate that are connected to each other, the main shaft module is connected to the first door plate, and the second door plate is provided with an avoidance slot. The first housing and the second housing are switched between the folded state and the unfolded state via the main shaft module. The first support structure and the second support structure are switched between the folded state and the unfolded state via the main shaft module.

In some embodiments, the first end of the first holding plate is connected to at least one of the first sub-part, the second sub-part, the first housing, and the first door plate.

The following describes an electronic device in this application in detail with reference to the accompanying drawings.

### Application Scenario 1

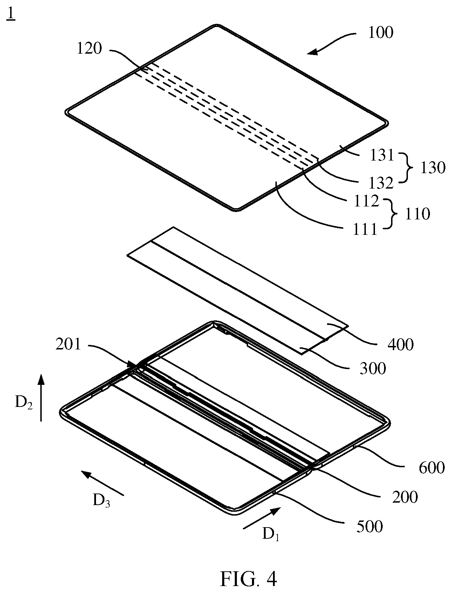

FIG. 4 is an exploded view of the electronic device 1 according to some embodiments of this application. As shown in FIG. 4, in some embodiments, the electronic device 1 includes a flexible screen 100, a hinge assembly 200, a first screen holder 300, a second screen holder 400, a first housing 500, and a second housing 600. The first housing 500 may include a first middle frame and a first cover. Similarly, the second housing 600 may also include a second middle frame and a second cover.

In an unfolded state, the flexible screen 100 and the hinge assembly 200 are stacked in a first direction D1, and the first screen holder 300 and the second screen holder 400 are arranged in parallel in a second direction D2, and are located between the flexible screen 100 and the hinge assembly 200. The first housing 500 and the second housing 600 are located on a side that is of the flexible screen 100 and that faces the hinge assembly 200, and the first housing 500 and the second housing 600 are respectively located on two opposite sides of the hinge assembly 200. In a folded state, the flexible screen 100, the hinge assembly 200, the first screen holder 300, and the second screen holder 400 are all in the folded state, and the first housing 500 and the second housing 600 are disposed opposite to each other.

The hinge assembly 200 is separately connected to the first housing 400 and the second housing 500. The flexible screen 100 and the first screen holder 300 are correspondingly mounted on the first housing 500, and the flexible screen 100 and the second screen holder 400 are correspondingly mounted on the second housing 600. The hinge assembly 200, the first housing 500, and the second housing 600 cooperate with each other to drive the flexible screen 100, the first screen holder 300, and the second screen holder 400 to fold or unfold, that is, the electronic device 1 is switched between the folded state and the unfolded state. An extension direction of the hinge assembly 200 may be defined as a third direction D3.

In some embodiments, the first housing 500 may be used as a first support structure, and the second housing 600 may be used as a third support structure.

In some embodiments, any two of the first direction D1, the second direction D2, and the third direction D3 intersect with each other.

In some embodiments, any two of the first direction D1, the second direction D2, and the third direction D3 are perpendicular to each other. It may be understood that being perpendicular to each other in this application is not absolutely perpendicular, and approximate perpendicularity due to factors such as a processing error and an assembly error (for example, an included angle between two structure features is 92°, 89.9°, 89°, or 88°) also falls within a range of being perpendicular to each other in this application. Limitations on being perpendicular to each other are not repeatedly described in the following.

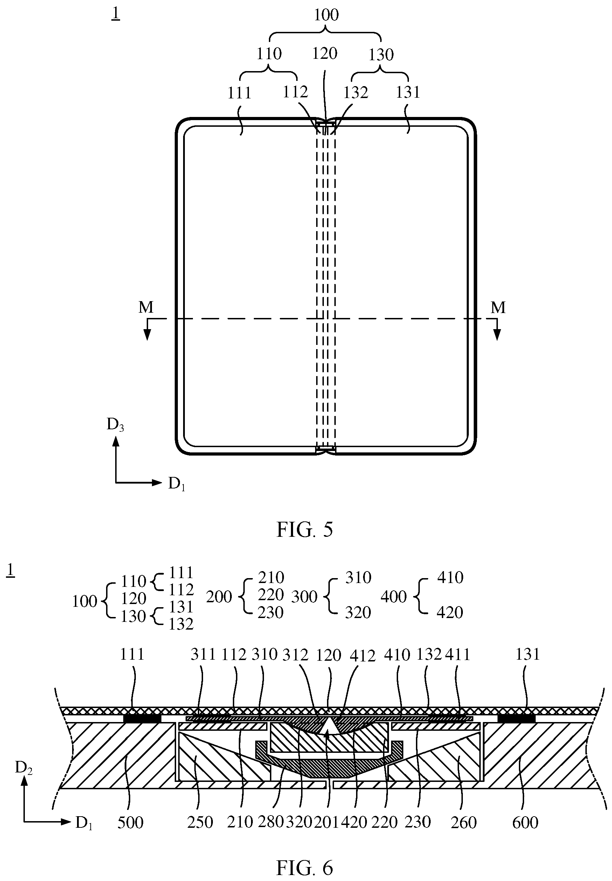

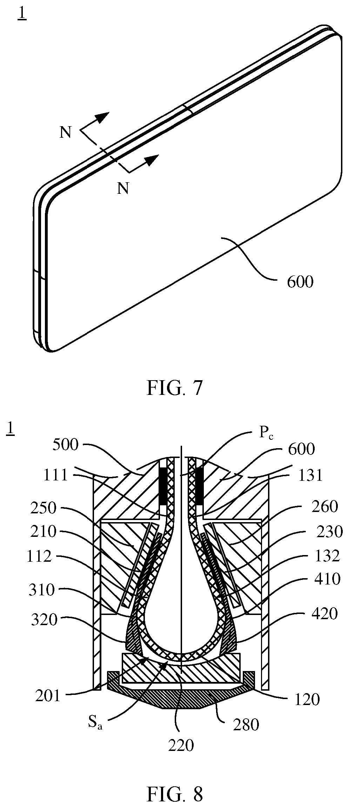

The following describes in detail a specific structure of each component in the electronic device 1 with reference to the accompanying drawings. FIG. 5 is a top view of the electronic device 1 in an unfolded state according to some embodiments of this application. FIG. 6 is a partially enlarged view of an area in which a screen holder is located after the electronic device 1 is cut along an M-M section in FIG. 5 according to some embodiments of this application. FIG. 7 is a three-dimensional diagram of the electronic device 1 in a folded state according to some embodiments of this application. FIG. 8 is a partially enlarged view of an area in which a screen holder is located after the electronic device 1 is cut along an N-N section in FIG. 7 according to some embodiments of this application.

First, a specific structure of the flexible screen 100 in this application is described with reference to the accompanying drawings.

It can be learned with reference to FIG. 4, FIG. 6, and FIG. 8 that, in some embodiments, the flexible screen 100 includes a first part 110, a second part 120, and a third part 130 that are sequentially connected. The first part 110 includes a first sub-part 111 and a second sub-part 112, and the first sub-part 111, the second sub-part 112, and the second part 120 are sequentially connected. The third part 130 includes a third sub-part 131 and a fourth sub-part 132, and the third sub-part 131, the fourth sub-part 132, and the second part 120 are sequentially connected. As shown in FIG. 6, in an unfolded state, the first part 110, the second part 120, and the third part 130 are sequentially disposed in a first direction D1. As shown in FIG. 8, in a folded state, the second part 120 is in a folded state, the first part 110 and the third part 130 are disposed opposite to each other, the first sub-part 111 in the first part 110 and the third sub-part 131 in the third part 130 are in a flat state, and the second sub-part 112 in the first part 110 and the fourth sub-part 132 in the third part 130 are in a bent state. In conclusion, the second sub-part 112, the fourth sub-part 132, and the second part 120 jointly form a bending area in the flexible screen 100, so that when the electronic device is in the folded state, the electronic device can be bent in a specific shape (for example, a water drop shape).

Still with reference to FIG. 4, FIG. 6, and FIG. 8, it can be learned that the first sub-part 111 is opposite to and fastened to the first housing 500, and the third sub-part 131 is opposite to and fastened to the second housing 600.

In some embodiments, the flexible screen 100 may be a flexible organic light-emitting diode (organic light-emitting diode, OLED). This is not specifically limited in this application.

After a specific structure of the flexible screen 100 is described, a specific structure of the hinge assembly 200 in this application is further described.

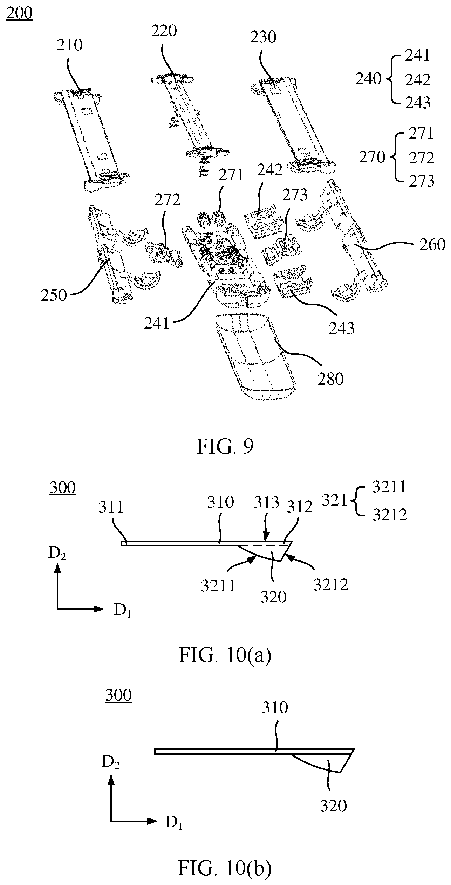

FIG. 9 is an exploded view of the hinge assembly 200 in the electronic device 1 according to some embodiments of this application. With reference to FIG. 6, FIG. 8, and FIG. 9, it can be learned that, in some embodiments, the hinge assembly 200 includes a first door plate 210, a second door plate 220, and a third door plate 230. The first door plate 210 is rotatably connected to the first housing 500, and the third door plate 230 is rotatably connected to the second housing 600. In the electronic device 1, the first door plate 210 is disposed opposite to the second sub-part 112 in the first part 110, the second door plate 220 is disposed opposite to the second part 120, and the third door plate 230 is disposed opposite to the fourth sub-part 132 in the third part 130. The second door plate 220 is provided with an avoidance slot 201 facing the second part 120 in the flexible screen 100.

As shown in FIG. 6, in the unfolded state, the first door plate 210, the second door plate 220, and the third door plate 230 are sequentially disposed in the first direction D1. As shown in FIG. 8, in the folded state, the first door plate 210, the second door plate 220, and the third door plate 230 jointly enclose accommodating space, and the accommodating space is used to accommodate at least a part of the flexible screen 100 in the folded state, the first screen holder 300, and the second screen holder 400. For example, the flexible screen 100 in the folded state includes the second part 120 in the folded state. For another example, the flexible screen 100 in the folded state includes at least a part of the first part 110 (for example, the second sub-part 112 in the first part 110), the second part 120, and at least a part of the third part 130 (for example, the fourth sub-part 132 in the third part 130) that are in the folded state.

In some embodiments, as shown in FIG. 6, in the unfolded state, an upper surface of the first door plate 210, an upper surface of the second door plate 220, and an upper surface of the third door plate 230 are in a same plane. It may be understood that, in this application, an upper surface of a component is a surface that is of the component and that is close to the flexible screen 100. That a plurality of surfaces are in a same plane means that the plurality of surfaces are approximately parallel to each other and are basically in a same plane. In other words, there may be an included angle within a specific range between the plurality of surfaces, and/or there may be a specific spacing between the plurality of parallel surfaces. Details are not described below. In the foregoing description, a surface that is of the hinge assembly 200 and that is close to the flexible screen 100 is the same plane. It may be understood that being parallel to each other in this application is not being absolutely parallel, and being approximately parallel due to factors such as a processing error and an assembly error (for example, an included angle between two structure features is 181°, 179.8°, 179°, or 178°) also falls within a range of being parallel to each other in this application. Limitations on being parallel to each other are not repeatedly described in the following.

In some embodiments, as shown in FIG. 6, in the unfolded state, an upper surface of the first door plate 210, an upper surface of the second door plate 220, an upper surface of the third door plate 230, an upper surface of the first housing 500, and an upper surface of the second housing 600 are in a same plane. In the electronic device 1, the upper surface of the door plate is designed to be even with the upper surface of the housing, so that a common standard of the existing electronic device 1 is met, design difficulty and assembly difficulty of the electronic device 1 are reduced, and overall economic benefits are improved.

In some embodiments, as shown in FIG. 6, in the unfolded state, an upper surface of the first screen holder 300, an upper surface of the second screen holder 400, an upper surface of the first housing 500, and an upper surface of the second housing 600 are in a same plane.

In the electronic device 1, the upper surface of the screen holder is designed to be even with the upper surface of the housing, so that difficulty in arranging the flexible screen 100 on the screen holder and the housing can be reduced, design difficulty and assembly difficulty of the electronic device 1 can be reduced, and overall economic benefits can be improved.

Still refer to FIG. 9. It can be learned that, in some embodiments, the hinge assembly 200 further includes a main shaft module 240, a first bracket 250, and a second bracket 260. The main shaft module 240 includes a shaft base 241, a first rotating block 242, and a second rotating block 243. The first bracket 250 and the second bracket 260 are oppositely disposed on two sides of the main shaft module 240, and are rotatably connected to the shaft base 240 respectively. For example, a rotating structure on the first bracket 250 cooperates with the first rotating block 242 and the second rotating block 243 to implement a rotatable connection between the first bracket 250 and the main shaft module 240. Similarly, a rotating structure on the second bracket 260 cooperates with the first rotating block 242 and the second rotating block 243 to implement a rotatable connection between the second bracket 260 and the main shaft module 240. The second door plate 220 is mounted on the main shaft module 240. The first door plate 210 is rotatably connected to the first bracket 260, the first door plate 210 is slidably connected to the main shaft module 240 (for example, the shaft base 241 in FIG. 9), and the first door plate 210 may further slide relative to the main shaft module 240 while rotating relative to the first bracket 260, and the first door plate 210. The third door plate 230 is rotatably connected to the second bracket 260, the third door plate 230 is slidably connected to the main shaft module 240 (for example, the shaft base 241 in FIG. 9), and the third door plate 230 may further slide relative to the main shaft module 240 while rotating relative to the second bracket 260.

Still refer to FIG. 9. It can be learned that in some embodiments, the hinge assembly 200 further includes a synchronous structure 270. The synchronous structure 270 is configured to implement synchronous relative folding or relative unfolding of the first housing 500 and the second housing 600. The synchronous structure 270 includes a first synchronous wheel 271, a first synchronous arm 272, and a second synchronous arm 273. The synchronous wheel 271 is rotatably connected to the main shaft module 240, a movable end of the first synchronous arm 272 is slidably connected to the first bracket 250, the movable end of the first synchronous arm 272 is rotatably connected to the first bracket 250, a synchronous end of the first synchronous arm 272 is rotatably connected to the main shaft module 240, and the synchronous end of the first synchronous arm 272 is engaged with the synchronous wheel 271. In a process in which the first bracket 250 and the second bracket 260 rotate relative to the main shaft module 240, the first synchronous arm 272 affects a rotation angle of the first bracket 250, and the second synchronous arm 273 affects a rotation angle of the second bracket 260. In this way, in a process in which the first synchronous arm 272 and the second synchronous arm 273 rotate synchronously relative to the main shaft module 240, the first bracket 250 and the second bracket 260 are driven to rotate synchronously relative to the main shaft module 240.

Still refer to FIG. 9. It can be learned that in some embodiments, the hinge assembly 200 further includes a cover 280. The cover 280 is located between the first housing 500 and the second housing 600, and the main shaft module 240 is mounted in the cover 280. In an unfolded state, a lower surface of the cover 280, a lower surface of the first housing 500, and a lower surface of the second housing 600 are in a same plane.

It may be understood that the foregoing embodiment shows only a specific structure of the hinge assembly 200 in some embodiments of this application. Another hinge assembly 200 that may include the first door plate 210, the second door plate 220, and the third door plate 230 also falls within a protection scope of this application. This is not specifically limited in this application.

In some embodiments, the second door plate 220 is a fixed plate body, and is fastened to the main shaft module 240. To be specific, when the electronic device 1 is switched from an unfolded state to a folded state, or when the electronic device 1 is switched from a folded state to an unfolded state, a position of the second door plate 220 relative to the main shaft module 240 remains unchanged.

In some other embodiments, the second door plate 220 is a liftable plate body, and is connected to the main shaft module 240 in a liftable manner. When the electronic device 1 is switched between the unfolded state and the folded state, the second door plate 220 can move in a second direction D2 relative to the main shaft module 240, that is, the second door plate 220 moves away from the main shaft module 240 in the second direction D2, or the second door plate 220 moves toward the main shaft module 240 in the second direction D2. In the foregoing structure, in an unfolding process, the second door plate 220 moves away from the cover 280, that is, the second door plate 220 gradually rises to support a flexible display panel 20. In a folding process, the second door plate 220 moves toward the cover 280, that is, the second door plate 220 gradually decreases, to cooperate with the first door plate 210 and the third door plate 230 to form accommodating space for accommodating the flexible screen 100.

In an implementation, the hinge assembly 200 includes an elastic structure (not shown in the figure), the second door plate 220 is elastically connected to the main shaft module 240 of the hinge assembly via the elastic structure, and in a folding process of the hinge assembly 200, the elastic structure drives the second door plate 220 to move toward the main shaft module 240 in the second direction D2. The elastic structure has a simple structure, is convenient to operate, and has high precision in controlling a lifting motion of the second door plate 220.

After a specific structure of the hinge assembly 200 is described, a specific structure of the first screen holder 300 in this application continues to be described.

With reference to FIG. 6 and FIG. 8, it can be learned that in some embodiments, the first screen holder 300 includes a first holding plate 310 and a first holding part 320 that are connected to each other, and the first holding part 320 is located on a side that is of the first holding plate 310 and that faces the flexible screen 100. The first holding plate 310 includes a first end 311 and a second end 312 that are opposite to each other, where the first end 311 is an end away from the second support structure. The second end 312 may be a free end located between the second part 120 and the second door plate 220. The first holding part 320 is mounted on the second end 312.

It can be learned from the foregoing description that, in some embodiments, the first end 311 is located between the first housing 500 and the first sub-part 111, and may be connected to the first sub-part 111 and/or the first housing 500. In some other embodiments, the first end 311 is located between the second sub-part 112 and the first door plate 210, and may be connected to the second sub-part 112 and/or the first door plate 210. In some other embodiments, the first end 311 is located between the second sub-part 112 and the first door plate 210, and the first screen holder 300 may be connected to at least one of the first sub-part 111, the first housing 500, the second part 112, and the first door plate 210.

In some implementations, the first end 311 is bonded and fastened to at least one of the first part 110 (including the first sub-part 111 and the second sub-part 112), the first door plate 210, and the first housing 500 through an adhesive layer. It may be understood that the foregoing connection manners are merely some examples of a connection manner between the first end 311 and at least one of the first part 110, the first door plate 210, and the first housing 500 in this application, any connection manner between the first end 311 and at least one of the first part 110, the first door plate 210, and the first housing 500 falls within the protection scope of this application. Examples are not described one by one.

When the electronic device 1 is switched from the unfolded state to the folded state, the first screen holder 300 at least partially fills a gap between the flexible screen 100 and the avoidance slot 201 on the second door plate 220, to prevent a concave trend formed by bending and creeping of the flexible screen 100, implement rapid recovery of the creeping, and improve light shadow and crease effects on the flexible screen 100 when the electronic device 1 is switched from the folded state to the unfolded state. In addition, when a user touches the second part 120 in the flexible screen 100, obvious collapse is avoided, and reliability of the flexible screen 100 is improved when a sharp foreign object extrudes and impacts the flexible screen.

The following describes several different first screen holders in detail with reference to the accompanying drawings.

FIG. 10(a) is a side view of the first screen holder 300 according to some embodiments of this application. An angle of the view is in a third direction D3. As shown in FIG. 10(a), in some embodiments, the first screen holder 300 includes a first holding plate 310 and a first holding part 320 that are connected to each other. The first holding part 320 is specially-shaped on a cross section perpendicular to the third direction D3. For example, the first holding part 320 is in a shape obtained after two sectors are combined on the cross section perpendicular to the third direction D3.

As shown in FIG. 10(a), in some embodiments, the first holding plate 310 has a same size in the second direction D2. That is, the first holding plate 310 is an equal-thickness plate-shaped structure.

In some embodiments, the first holding part 320 may a block-shaped structure, or may be a three-dimensional structure formed by sheet-shaped or filament-shaped bending and/or combination. This is not specifically limited in this application.

As shown in FIG. 10(a), in some embodiments, a side that is of the first holding part 320 and that backs on the first holding plate 310 is provided with a guide surface 321. When the electronic device 1 is switched between an unfolded state and a folded state, the guide surface 321 cooperates with a slot surface of the avoidance slot 201, to provide guide for a process in which the first holding part 320 enters and/or falls out of the avoidance slot 201.

As shown in FIG. 10(a), in some implementations, the guide surface 321 is a surface that is on the first holding part 320 and that backs on the holding plate 310. In view of this, when the electronic device 1 is switched between the unfolded state and the folded state, the guide surface 321 cooperates with the second door plate 220 and the avoidance slot 201 on the second door plate 220, so that the first holding plate 310 is bent and deformed based on a radian arched from the guide surface 321, to drive the first holding part 320 to enter and/or fall out of the avoidance slot 201.

As shown in FIG. 10(a), in some implementations, the guide surface 321 includes a first guide surface 3211 and a second guide surface 3212. The first guide surface 3211 is closer to the first end 311 of the first holding plate 310 than the second guide surface 3212. In the second direction D2, a point on the first guide surface 3211 gradually moves away from a perpendicular bisector of the avoidance slot 201, and a point on the first guide surface 3211 gradually moves toward the perpendicular bisector of the avoidance slot 201. The perpendicular bisector of the avoidance slot 201 may be understood as a line parallel to the second direction D2 at a middle position of a cross section of the avoidance slot 201 in the first direction D1.

In a process in which the electronic device 1 is switched from the unfolded state to the folded state, the first guide surface 3211 provides guide for an early process in which the first holding part 320 falls out of the avoidance slot 201, and the second guide surface 322 provides guide for a later process in which the first holding part 320 falls out of the avoidance slot 201. In the process in which the electronic device 1 is switched from the folded state to the unfolded state, the second guide surface 322 provides guide for an early process in which the first holding part 320 enters the avoidance slot 201, and the first guide surface 3211 provides guide for a later process in which the first holding part 320 enters the avoidance slot 201.

With reference to FIG. 6, FIG. 8, and FIG. 10(a), it can be learned that in some implementations, the first guide surface 3211 may be a surface that adapts to the avoidance slot 201. In the unfolded state, the first guide surface 3211 is attached to a part of the slot surface of the avoidance slot 201. In the foregoing electronic device 1, a guide function of the guide surface may be optimized by properly designing the guide surface, and jitter during switching between the unfolded state and the folded state is reduced, to help improve stability during switching between the unfolded state and the folded state.

In addition, the following describes an assembly relationship between the flexible screen 100 and the first screen holder 300 with reference to FIG. 6, FIG. 8, and FIG. 10(a).

In some embodiments, as shown in FIG. 6, in the unfolded state, the flexible screen 100 is distributed on the projection plane, and an orthographic projection of the first holding part 320 on the projection plane partially overlaps an orthographic projection of the avoidance slot 201 on the projection plane.

As shown in FIG. 10(a), in some embodiments, in the folded state, the first holding plate 310 and/or the first holding part 320 in the first screen holder 300 are/is at least partially bonded to a slot opening of the avoidance slot 201 on the second door plate 220. For the electronic device 1, a structure of the first screen holder 300 is properly designed, so that it can be ensured that the first screen holder 300 does not completely fall out of the avoidance slot 201 in the folded state. This helps limit a sliding direction of the first screen holder 300 relative to the slot surface of the avoidance slot 201 when the folded state is switched back to the unfolded state.

In some embodiments, in the folded state, the second part 120 and the second door plate 220 are spaced from each other. As shown in FIG. 10(a), the first screen holder 300 is located on a side of a central plane Pc, and is spaced from the central plane Pc. The central plane Pc is perpendicular to the main shaft module, and is perpendicular to a distribution plane (namely, a projection plane) of the flexible screen 100 in the unfolded state. It is not difficult to find based on FIG. 8 that, in the folded state, the first screen holder 300 and the second door plate 220 form release space Sa, and the bent second part 120 is located in the release space Sa.

For the electronic device 1, in the folded state, a structure of the first screen holder 300 is properly designed, so that the first screen holder 300 and the second door plate 220 form release space Sa. In addition, the bent second part 120 is located in the release space Sa, so that stress between the flexible screen 100 and the first screen holder 300 is reduced, pressure of the first screen holder 300 on the second part 120 in the flexible screen 100 is weakened, and layering and misplacement of the flexible screen 100 are avoided.

As shown in FIG. 10(a), in some embodiments, in the unfolded state, the second end 312 of the first holding plate 310 is attached to the flexible screen 100. In the folded state, the second end 312 of the first holding plate 310 is separated from the flexible screen 100.

That is, in the unfolded state, the second end 312 is located between the avoidance slot 201 and the second part 120, and is attached to the flexible screen 100, so that the second end 312 supports the second part 120 in the flexible screen 100 in the unfolded state, and a sense of virtual position is weakened when a user touches the second part 120.

In the folded state, the second end 312 is separated from the flexible screen 100, so that space is released between the second part 120 and the first screen holder 300, stress between the flexible screen 100 and the second end 312 is reduced, pressure of the second end 312 on the second part 120 in the flexible screen 100 is weakened, and layering and misplacement of the flexible screen 100 are avoided.

In addition, in the foregoing electronic device 1, when spacing between the second end 312 of the first holding plate 310 and the central plane Pc is small, the second end 312 is separated from the flexible screen 100 to form release space Sa. This expands a size selection range of the first holding plate 310, reduces design difficulty of the first holding plate 310, and ensures that the first screen holder 300 is in lap joint with a slot opening of the avoidance slot 201 in the folded state, thereby improving running stability of the electronic device 1.

As shown in FIG. 10(a), the first holding plate 310 has a holding surface 313 that backs on the first holding part 320. With reference to FIG. 6, FIG. 8, and FIG. 10(a), it is not difficult to find that, in the unfolded state, the holding surface 313 of the first holding plate 310 is attached to the lower surface of the flexible screen 100. In the folded state, a partial surface that is of the holding surface 313 of the first holding plate 310 and that is close to the second end 312 is separated from the lower surface of the flexible screen 100.

With reference to FIG. 6 and FIG. 10(a), it is not difficult to find that, in some embodiments, in the unfolded state, a surface that is of the first holding part 320 and that faces the avoidance slot 201 is at least partially attached to the slot surface of the avoidance slot 201.

In some implementations, in the unfolded state, a surface that is of the first holding part 320 and that faces the avoidance slot 201 is partially attached to the slot surface of the avoidance slot 201. For example, in the unfolded state, the first guide surface 3211 of the first holding part 320 is attached to the slot surface of the avoidance slot 201. The second guide surface 3212 of the first holding part 320 is not attached to the slot surface of the avoidance slot 201. In some other alternative implementations, in the unfolded state, a surface that is of the first holding part 320 and that faces the avoidance slot 201 is completely attached to the slot surface of the avoidance slot 201.

In some embodiments, in the unfolded state, in the unfolded state, a surface that is of the first holding part 320 and that faces the avoidance slot 201 is at least partially attached to the slot surface of the avoidance slot 201. A surface that is of the first holding part 320 and that backs on the avoidance slot 201 is attached to the flexible screen 100.

The electronic device 1 partially fills the gap between the avoidance slot 201 and the flexible screen 100, to effectively support the second part 120 in an area in which the avoidance slot 201 is located in the unfolded state.

In some embodiments, in the unfolded state, a surface that is of the first holding part 320 and that faces the avoidance slot 201 is partially attached to the slot surface of the avoidance slot 201. A surface that is of the first holding part 320 and that backs on the avoidance slot 201 is attached to the flexible screen 100.

The electronic device 1 can effectively support the second part 120 in the area in which the avoidance slot 201 is located in the unfolded state, and can further effectively release space for the first holding part 320 in the folded state, so that the second part 120 in the flexible screen 100 can be accommodated in the avoidance slot 201.

As shown in FIG. 10(a), in some embodiments, the first holding plate 310 and the first holding part 320 are integrally formed, and a material of each of the first holding plate 310 and the first holding part 320 includes at least one of metal, resin, and fiber. That is, the first holding plate 310 and the first holding part 320 are integrally formed, a material of the first holding plate 310 is at least one of metal, resin, and fiber, and a material of the first holding part 320 is at least one of metal, resin, and fiber. It may be understood that materials of the first holding plate 310 and the first holding part 320 may be the same, or may be different. This is not specifically limited in this application.

In some embodiments, this application further includes a towing component. One end of the towing component is connected to the first end 311 of the first holding plate 310, and the other end of the towing component is connected to the first door plate 210. The towing component is configured to: when the electronic device 1 is switched from the folded state to the unfolded state, tow the first holding part 320 into the avoidance slot 201.

FIG. 10(b) is a side view of the first screen holder 300 according to some embodiments of this application. An angle of the view is in a third direction D3. As shown in FIG. 10(b), in some embodiments, the first holding plate 310 and the first holding part 320 are assembled into the first screen holder 300 after being separately formed. A material of the first holding plate 310 includes at least one of metal, resin, or fiber, and a material of the first holding part 320 includes at least one of metal, resin, or fiber. In some implementations, the first holding plate 310 and the first holding part 320 are fastened to each other after being separately formed.

In some embodiments, the first holding plate 310 and the first holding part 320 in the first screen holder 300 may be made of a same material. For example, materials of the first holding plate 310 and the first holding part 320 are both metal.

In some other embodiments, two or more materials are properly selected for the first holding plate 310 and the first holding part 320 based on different yield strength and abrasion resistance requirements, and the two or more materials are superimposed to form the first screen holder 300. For example, a material of the first holding plate 310 is plastic, and a material of the first holding plate 310 is metal.

In some embodiments, the first holding plate 310 and the first holding part 320 may be assembled through at least one of bonding, welding, and fastening. This is not specifically limited in this application.

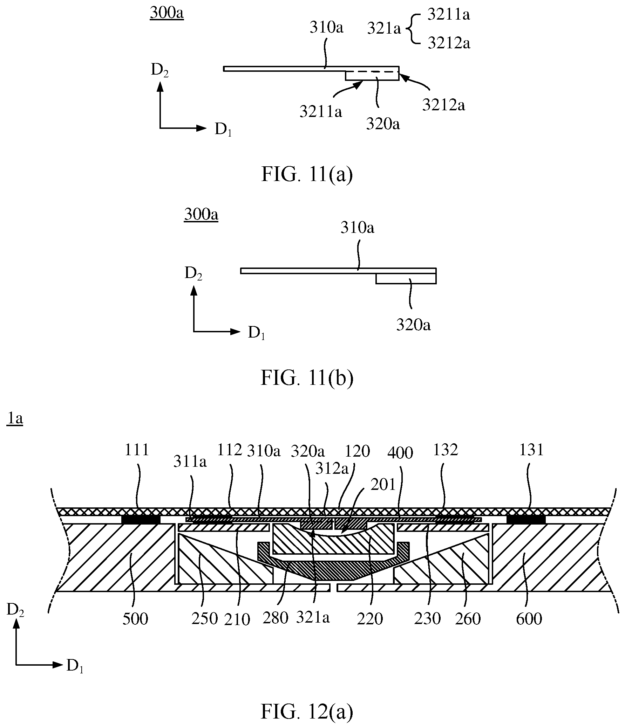

FIG. 11(a) is a side view of the first screen holder 300a according to some embodiments of this application. An angle of the view is in a third direction D3. The first screen holder 300a includes a first holding plate 310a and a first holding part 320a. By comparing FIG. 10(a) with FIG. 11(a), it is not difficult to find that the first holding plate 310a is only adaptively adjusted relative to the first holding plate 310. Details are not described herein. A difference between the first screen holder 300a and the first screen holder 300 lies in that the first holding part 310a and the first holding part 310 are different in shape on a cross section perpendicular to the third direction D3. The first holding part 320 is specially-shaped, for example, is in a shape obtained after two sectors are combined on a cross section perpendicular to the third direction D3. The first holding part 320a is in a standard shape, for example, is rectangular on the cross section perpendicular to the third direction D3. The first holding part 320a has a guide surface 321a on a plane that backs on the first holding plate 310a, and the guide surface 321a is configured to provide guide for a process in which the first holding part 320a enters and/or falls out of the avoidance slot 201. In some implementations, the guide surface 321a includes a first guide surface 3211a and a second guide surface 3212a.

As shown in FIG. 11(a), in the first screen holder 300a, the first holding plate 310a and the first holding part 320a are integrally formed. FIG. 11(b) is a side view of the first screen holder 300a according to some embodiments of this application. An angle of the view is in a third direction D3. As shown in FIG. 11(b), in some embodiments, the first holding plate 310a and the first holding part 320a are assembled into the first screen holder 300a after being separately formed. It may be understood that, in this application, for details about a material and a forming manner of the first screen holder 300a, refer to the material and the forming manner of the first screen holder 300. Details are not described herein again.

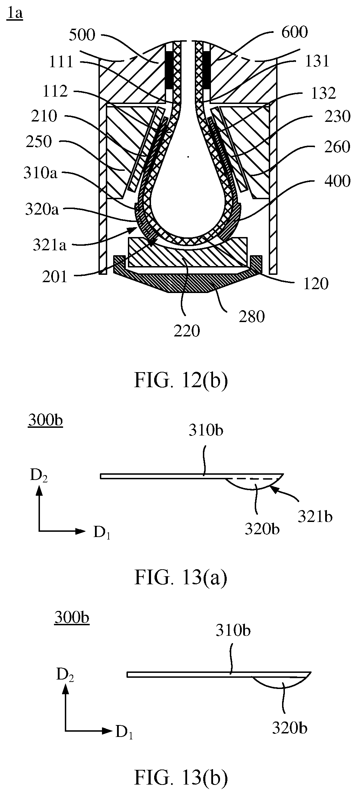

FIG. 12(a) is a sectional view of an electronic device 1a in an unfolded state according to some embodiments of this application. FIG. 12(b) is a sectional view of the electronic device 1a in a folded state according to some embodiments of this application. By comparing FIG. 12(a) with FIG. 6, comparing FIG. 12(b) with FIG. 8 respectively, it is not difficult to find that a difference between the electronic device 1a and the electronic device 1 lies in that the screen holder changes. As shown in FIG. 12(a) and FIG. 12(b), the first screen holder 300a includes a first holding plate 310a and a first holding part 320a that are connected to each other. Compared with the first holding part 310, the first holding part 310a is rectangular on the cross section perpendicular to the third direction D3, and the like. The first holding part 320a is located on a side that is of the first holding plate 310a and that backs on the flexible screen 100. The first holding plate 310a includes a first end 311a and a second end 312a that are opposite to each other. The first end 311a is located between the first part 110 (including the first sub-part 111 and the second sub-part 112) and the first door plate 210, and may be connected to the first part 110 (including the first sub-part 111 and the second sub-part 112) and/or the first door plate 210. The second end 312a may be a free end located between the second part 120 and the second door plate 220. The first holding part 320a is mounted on the second end 312a.

It may be understood that, compared with the first screen holder 300, the first screen holder 300 changes in an attaching manner with the avoidance slot 201 on the second door plate 220 due to a change of a shape of the first holding part 310a on the cross section perpendicular to the third direction D3, and the like. As shown in FIG. 12(a), in an unfolded state, an edge of the first holding part 320a abuts against the slot surface of the avoidance slot 201. As shown in FIG. 12(b), in a folded state, the guide surface 321a of the first holding part 320a abuts against the slot surface of the avoidance slot 201.

For the electronic device 1a, the first holding part 320a in the first screen holder 300a is designed as a rectangular structure, so that design difficulty and molding difficulty of the first screen holder 300a are reduced.

FIG. 13(a) is a side view of the first screen holder 300b according to some embodiments of this application. An angle of the view is in a third direction D3. The first screen holder 300b includes a first holding plate 310b and a first holding part 320b. By comparing FIG. 10(a) with FIG. 13(a), it is not difficult to find that the first holding plate 310b is only adaptively adjusted relative to the first holding plate 310, and a difference between the first screen holder 300b and the first screen holder 300 lies in that: The first screen holder 300b and the first screen holder 300 are different in shape on the cross section perpendicular to the third direction D3. The first holding part 320 is specially-shaped, for example, is in a shape obtained after two sectors are combined on the cross section perpendicular to the third direction D3. The first holding part 320b is in a semi-ellipse shape on the cross section perpendicular to the third direction D3. A side that is of the first holding part 320b and that backs on the first holding plate 310b is provided with a guide surface 321b. As shown in FIG. 13(a), the guide surface 321b is an arc surface that is arched back to the body. The guide surface 321b is configured to provide guide for a process in which the first holding part 320b enters and/or falls out of the avoidance slot 201.

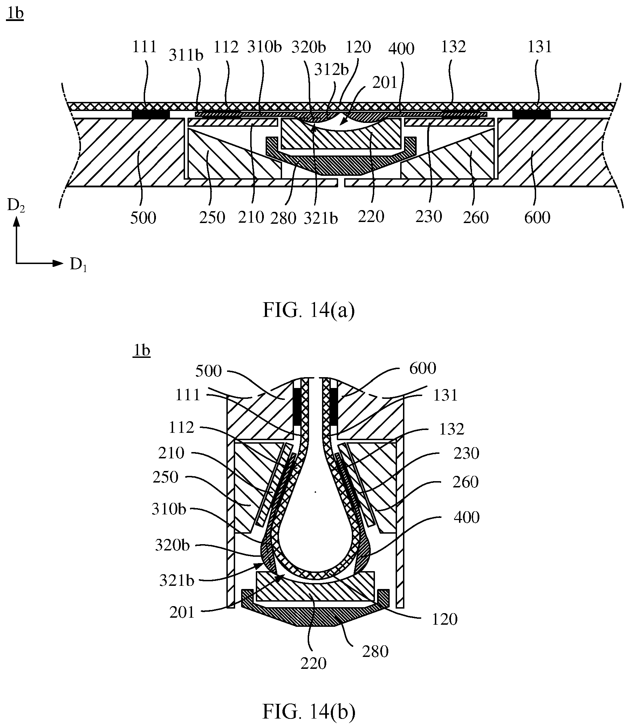

FIG. 14(a) is a sectional view of an electronic device 1b in an unfolded state according to some embodiments of this application. FIG. 14(b) is a sectional view of the electronic device 1b in a folded state according to some embodiments of this application. By comparing FIG. 14(a) with FIG. 6, and comparing FIG. 14(b) with FIG. 8 respectively, it is not difficult to find that a difference between the electronic device 1b and the electronic device 1 lies in that the first screen holder changes. As shown in FIG. 14(a) and FIG. 14(b), the first screen holder 300b includes a first holding plate 310b and a first holding part 320b that are connected to each other. Compared with the first holding part 310, the first holding part 310b is in the shape of a semi-ellipse on the cross section perpendicular to the third direction D3, and the like. The first holding part 320b is located on a side that is of the first holding plate 310b and that backs on the flexible screen 100. The first holding plate 310b includes a first end 311b and a second end 312b that are opposite to each other. The first end 311b is located between the first part 110 (including the first sub-part 111 and the second sub-part 112) and the first door plate 210, and may be connected to the first part 110 (including the first sub-part 111 and the second sub-part 112) and/or the first door plate 210. The second end 312b may be a free end located between the second part 120 and the second door plate 220. The first holding part 320b is mounted on the second end 312b.

It may be understood that, compared with the first screen holder 300, the first screen holder 300 changes in an attaching manner with the avoidance slot 201 on the second door plate 220 due to a change of a shape of the first holding part 310b on the cross section perpendicular to the third direction D3, and the like. As shown in FIG. 14(a), in an unfolded state, a guide surface of the first holding part 320b is tangent to the slot surface of the avoidance slot 201, and another area, rather than the tangential area, of the guide surface is suspended on the slot surface of the avoidance slot 201. As shown in FIG. 14(b), in a folded state, the guide surface of the first holding part 320b is tangent to the slot surface of the avoidance slot 201.

In the electronic device 1b, the guide surface of the first holding part 320b in the first screen holder 300b is designed as a smooth curved surface, thereby improving stability of the first screen holder 300b in a process in which the electronic device 1b is switched between the unfolded state and the folded state.

After a specific structure of the first screen holder 300 is described, the following continues to describe a specific structure of the second screen holder 400 in this application.

As shown in FIG. 6 and FIG. 8, in some embodiments, the second screen holder 400 includes a second holding plate 410 and a second holding part 420 that are connected to each other, and the second holding part 420 is located on a side that is of the second holding plate 410 and that backs on the flexible screen 100. The second holding plate 410 includes a third end 411 and a fourth end 412. The fourth end 412 may be a free end located between the second part 120 and the second door plate 220. The second holding part 420 is mounted on the fourth end 412.

It can be learned from the foregoing description that, in some embodiments, the third end 411 may be connected to at least one of the third part 130 (including the third sub-part 131 and the fourth sub-part 132), the third door plate 230, and the second housing 600.

It is not difficult to find that in some embodiments, for example, as shown in FIG. 6, FIG. 8, FIG. 12(a), FIG. 12(b), FIG. 14(a), and FIG. 14(b), a structure of the second screen holder 400 is symmetrical with a structure of the first screen holder 300. Therefore, all features corresponding to the first screen holder 300 are applicable to the second screen holder 400. Details are not described herein.

In some other embodiments, a structure of the second screen holder 400 adapts to a structure of the first screen holder 300. Several cases are described below with reference to the accompanying drawings.

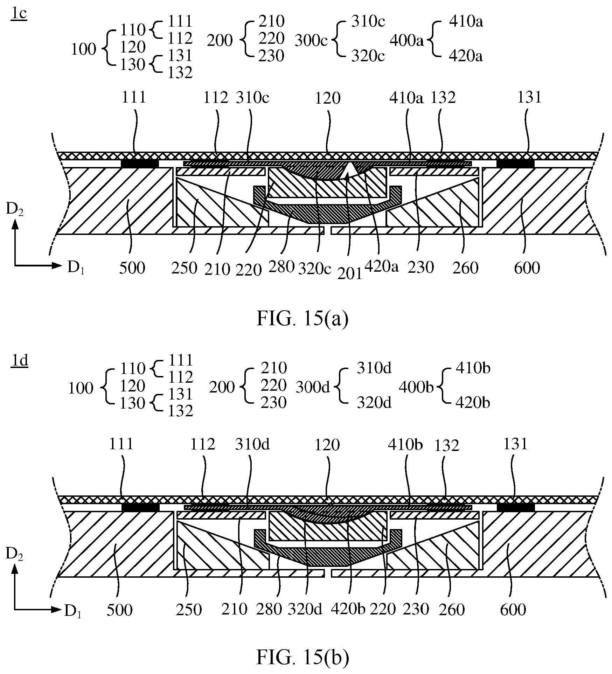

FIG. 15(a) is a sectional view of an electronic device 1c in an unfolded state according to some embodiments of this application. As shown in FIG. 15(a), the electronic device 1c includes a flexible screen 100, a hinge assembly 200, a first screen holder 300c, a second screen holder 400a, a first housing 500, and a second housing 600. It is not difficult to find by comparing FIG. 15(a) with FIG. 6 that, a screen holder in the electronic device 1c changes relative to that in the electronic device 1. As shown in FIG. 15(a), the first screen holder 300c and the second screen holder 400a are asymmetrical on a cross section perpendicular to the third direction D3, that is, the first screen holder 300c and the second screen holder 400a are not symmetrical components. For example, the first holding plate 310c in the first screen holder 300c and the second holding plate 410a in the second screen holder 400a are asymmetrical, and/or the first holding part 320c in the first screen holder 300c and the second holding part 420a in the second screen holder 400a are asymmetrical.

However, it should be noted that a cross section shape of the first screen holder 300c may be similar to a cross section shape of the second screen holder 400a in structure. This is not specifically limited in this application.

FIG. 15(b) is a sectional view of an electronic device 1d in an unfolded state according to some embodiments of this application. As shown in FIG. 15(b), the electronic device 1d includes a flexible screen 100, a hinge assembly 200, a first screen holder 300d, a second screen holder 400b, a first housing 500, and a second housing 600. It is not difficult to find by comparing FIG. 15(b) with FIG. 15(a) that, a screen holder in the electronic device 1d changes relative to that in the electronic device 1. As shown in FIG. 15(b), the first screen holder 300d and the second screen holder 400b are asymmetrical on the cross section perpendicular to the third direction D3, and an orthographic projection of the first screen holder 300d on a projection plane at least partially overlaps an orthographic projection of the second screen holder 400b on the projection plane.

In addition, the first screen holder 300d and the second screen holder 400b are combined to fill up the entire avoidance slot 201. This is not specifically limited in this application.

After specific structures of the first screen holder 300 and the second screen holder 400 are described, the following describes a relative position relationship between the first screen holder 300 and the second screen holder 400 relative to another structure (for example, the avoidance slot 201 on the second door plate 220) with reference to the accompanying drawings.

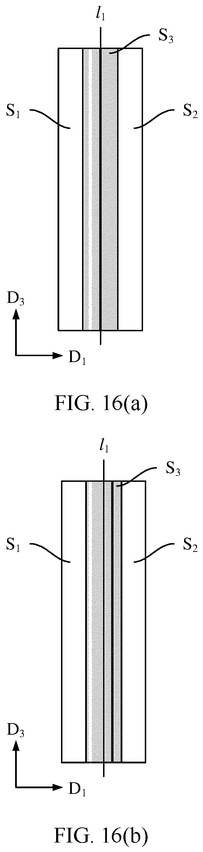

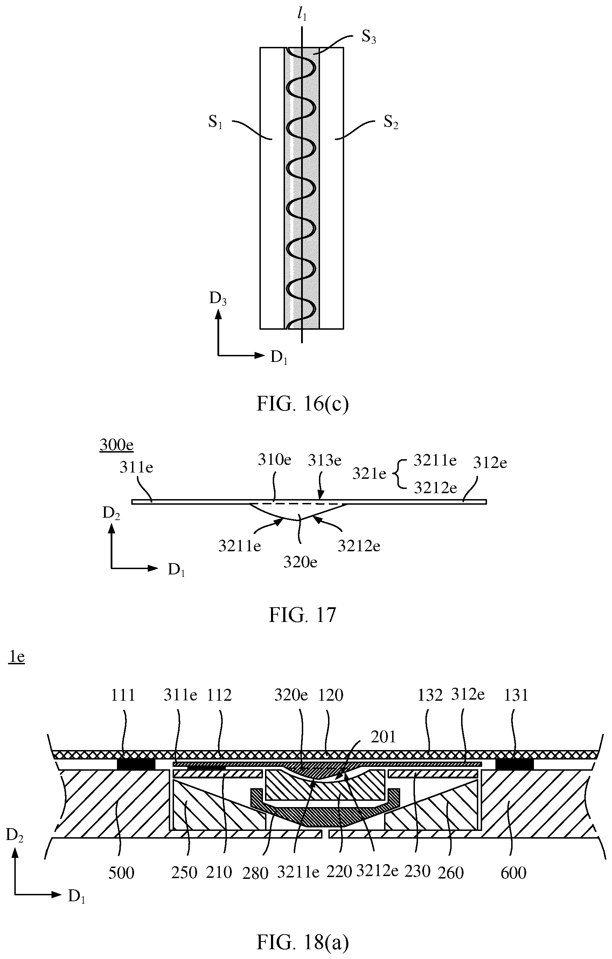

FIG. 16(a) is a diagram of a relative position relationship between the first screen holder 300, the second screen holder 400, and the avoidance slot 201 according to some embodiments of this application. FIG. 16(b) is a diagram of a relative position relationship between the first screen holder 300, the second screen holder 400, and the avoidance slot 201 according to some other embodiments of this application. FIG. 16(c) is a diagram of a relative position relationship between the first screen holder 300, the second screen holder 400, and the avoidance slot 201 according to some other embodiments of this application. In FIG. 16(a) to FIG. 16(c), 11 represents an orthographic projection of a center line of the slot opening of the avoidance slot 201 on the projection plane, and the center line is parallel to a central plane. S1 represents an orthographic projection of the first screen holder 300 on the projection plane, S2 represents an orthographic projection of the second screen holder 400 on the projection plane, and S3 (a gray area in the figure) represents an orthographic projection of the avoidance slot 201 on the projection plane.

It may be understood that, in some implementations, an orthographic projection of the first screen holder 300 on the projection plane may be an orthographic projection of the first holding plate 310 on the projection plane, and an orthographic projection of the second screen holder 400 on the projection plane may be an orthographic projection of the second holding plate 410 on the projection plane.

As shown in FIG. 16(a) to FIG. 16(c), in some embodiments, the orthographic projection S1 of the first screen holder 300 on the projection plane and the orthographic projection S2 of the second screen holder 400 on the projection plane separately at least partially overlap the orthographic projection S3 of the avoidance slot 201 on the projection plane.

In some embodiments, a first shortest distance between the orthographic projection S1 of the first screen holder 300 on the projection plane and the orthographic projection S2 of the second screen holder 400 on the projection plane ranges from 0.1 mm to 1 mm, for example, the first shortest distance may be at least one of 0.1 mm, 0.2 mm, 0.3 mm, 0.4 mm, 0.5 mm, 0.6 mm, 0.7 mm, 0.8 mm, 0.9 mm, and 1 mm.

In some implementations, 11 may coincide with an orthographic projection of a folding axis on the projection plane. In some other alternative implementations, 11 may alternatively not coincide with an orthographic projection of the folding axis on the projection plane. This is not specifically limited in this application.

As shown in FIG. 16(a), in some embodiments, the orthographic projection S1 of the first screen holder 300 on the projection plane and the orthographic projection S2 of the second screen holder 400 on the projection plane are respectively distributed on two opposite sides of 11. That is, the first screen holder 300 and the second screen holder 400 are respectively distributed on two sides of the central plane.

In some implementations, the first screen holder 300 and the second screen holder 400 are symmetrical in structure, and are symmetrically distributed with respect to the central plane. In some other alternative implementations, the first screen holder 300 and the second screen holder 400 are asymmetrically distributed with respect to the central plane. For example, the orthographic projection S1 of the first screen holder 300 on the projection plane and the orthographic projection S2 of the second screen holder 400 on the projection plane are asymmetrically distributed with respect to the central plane. For another example, the orthographic projection S1 of the first screen holder 300 on the projection plane and the orthographic projection S2 of the second screen holder 400 on the projection plane are symmetrically distributed with respect to the central plane, but structures of the first screen holder 300 and the second screen holder 400 are asymmetrical.

In some implementations, a gap between the orthographic projection S1 of the first screen holder 300 on the projection plane and the orthographic projection S2 of the second screen holder 400 on the projection plane is at least one of a long strip gap, a wave gap, a sawtooth gap, and a fold line gap.

As shown in FIG. 16(b), in some embodiments, the orthographic projection S1 of the first screen holder 300 on the projection plane is distributed on two sides of l1, and the orthographic projection S2 of the second screen holder 400 on the projection plane is located on one side of l1. That is, the first screen holder 300 is distributed on two sides of the central plane, and the second screen holder 400 is distributed on one side of the central plane.

In some implementations, a gap between the orthographic projection S1 of the first screen holder 300 on the projection plane and the orthographic projection S2 of the second screen holder 400 on the projection plane is at least one of a long strip gap, a wave gap, a sawtooth gap, and a fold line gap.

As shown in FIG. 16(c), in some embodiments, the orthographic projection S1 of the first screen holder 300 on the projection plane is distributed on two sides of 11. The orthographic projection S2 of the second screen holder 400 on the projection plane is distributed on two sides of l1. That is, the first screen holder 300 is distributed on two sides of the central plane, and the second screen holder 400 is distributed on two sides of the central plane.

In some implementations, a gap between the orthographic projection S1 of the first screen holder 300 on the projection plane and the orthographic projection S2 of the second screen holder 400 on the projection plane is at least one of a long strip gap, a wave gap, a sawtooth gap, and a fold line gap.

It may be understood that the foregoing embodiment shows only a partial solution of projection of the first screen holder 300 and the second screen holder 400 in the first direction D1, and any layout solution of the first screen holder 300 and the second screen holder 400 that may include a local opening to avoid a surrounding component (for example, the hinge assembly 200) falls within the protection scope of this application. This is not specifically limited in this application.

It may be understood that the foregoing embodiment merely shows a distribution feature of the first screen holder 300 and the second screen holder 400 in the first direction D1. In the third direction D1, there may be a plurality of first screen holders 300, and there may also be a plurality of second screen holders 400. Details are not described herein.

In some embodiments, when there are a plurality of first screen holders 300 in the third direction D1, the plurality of first screen holders 300 may be arranged at intervals. In some implementations, a second shortest distance between two adjacent first screen holders 300 ranges from 0.1 mm to 1 mm. For example, the second shortest distance may be at least one of 0.1 mm, 0.2 mm, 0.3 mm, 0.4 mm, 0.5 mm, 0.6 mm, 0.7 mm, 0.8 mm, 0.9 mm, and 1 mm. Similarly, when there are a plurality of second screen holders 400 in the third direction D1, the plurality of second screen holders 400 may also be arranged at intervals. In some implementations, a third shortest distance between two adjacent second screen holders 400 ranges from 0.1 mm to 1 mm. For example, the third shortest distance may be at least one of 0.1 mm, 0.2 mm, 0.3 mm, 0.4 mm, 0.5 mm, 0.6 mm, 0.7 mm, 0.8 mm, 0.9 mm, and 1 mm. This is not specifically limited in this application.

In addition, this application further provides a screen holder. It may be understood that: The screen holder may be any one of the first screen holder 300, the first screen holder 300a, the first screen holder 300b, the first screen holder 300c, the first screen holder 300d, the second screen holder 400, the second screen holder 400a, and the second screen holder 400b.

In addition, this application further provides a flexible screen assembly. The flexible screen assembly includes a flexible screen 100 and a screen holder. The screen holder may be any one of the first screen holder 300, the first screen holder 300a, the first screen holder 300b, the first screen holder 300c, the first screen holder 300d, the second screen holder 400, the second screen holder 400a, and the second screen holder 400b. For a manner of disposing the flexible screen 100 and the screen holder, refer to a manner of disposing the electronic device 1, the electronic device 1a, the electronic device 1b, the electronic device 1c, and the flexible screen 100 and the screen holder in the electronic device 1d.

The following uses an example in which the flexible screen assembly includes the flexible screen 100 and the first screen holder 300 for description. The flexible screen 100 and the first screen holder 300 are stacked. The flexible screen 100 includes a first part 110, a second part 120, and a third part 130 that are sequentially connected. In the folded state, the first part 110 and the third part 130 are disposed opposite to each other, and the second part 120 is at least partially located in the avoidance slot 201 on the hinge assembly 200 in the electronic device 1. The first screen holder 300 includes a first holding plate 310 and a first holding part 320 that are connected to each other. A first end 311 of the first holding plate 310 is connected to the first part 110 and/or the first door plate 210. The first holding part 320 is located on a side that is of the first holding plate 310 and that backs on the flexible screen 100. In the unfolded state, the first holding part 320 is located in the avoidance slot 201; and in the folded state, the first holding part 320 is at least partially located outside the avoidance slot 201.

In addition, this application further provides another flexible screen assembly. A screen holder includes a first screen holder and a second screen holder. The first screen holder may include any one of the first screen holder 300, the first screen holder 300a, the first screen holder 300b, the first screen holder 300c, and the first screen holder 300d. The second screen holder may include any one of the second screen holder 400, the second screen holder 400a, and the second screen holder 400b. For a manner of disposing the flexible screen 100 and the screen holder, refer to a manner of disposing the electronic device 1, the electronic device 1a, the electronic device 1b, the electronic device 1c, and the flexible screen 100 and the screen holder in the electronic device 1d. Details are not described herein again.

In this application, it is not difficult to find that in the electronic device 1 corresponding to the application scenario 1, there are two screen holders in the second direction D2, which are specifically the first screen holder 300 and the second screen holder 400. It should be noted that, in another application scenario, a quantity of screen holders in the second direction D2 may also be 1, and a specific implementation form is described in detail in the application scenario 2 and the application scenario 3.

### Application scenario 2

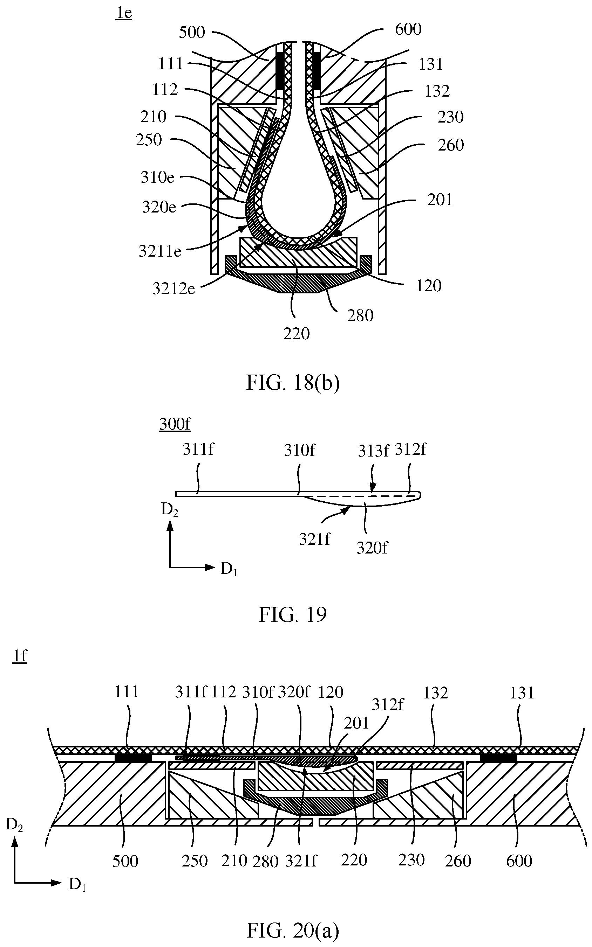

FIG. 17 is a side view of a first screen holder 300e according to some embodiments of this application. FIG. 18(a) is a sectional view of an electronic device 1e in an unfolded state according to some embodiments of this application. FIG. 18(b) is a sectional view of the electronic device 1e in a folded state according to some embodiments of this application.

With reference to FIG. 17, FIG. 18(a), and FIG. 18(b), it is not difficult to find that this application provides an electronic device 1e. In some embodiments, the electronic device 1e includes a flexible screen 100, a hinge assembly 200, a first screen holder 300e, a first housing 500, and a second housing 600. By comparing FIG. 17 with FIG. 10(a), and comparing FIG. 18(a) with FIG. 6, FIG. 18(b), and FIG. 8 respectively, it is not difficult to find that compared with those of the electronic device 1, a quantity and structures of screen holders in the electronic device 1e are changed.

As shown in FIG. 17, the first screen holder 300e includes a first holding plate 310e and a first holding part 320e, and the first holding part 320e is configured to be disposed opposite to the avoidance slot 201 on the second door plate 220. The first holding plate 310e includes a first end 311e and a second end 312e that are opposite to each other. The first holding part 320e is mounted in an area between the first end 311e and the second end 312e of the first holding plate 310e.

With reference to FIG. 17, FIG. 18(a), and FIG. 18(b), it can be learned that, in an unfolded state, the first end 311e of the first holding plate 310e is located between the first part 110 (including the first sub-part 111 and the second sub-part 112) and the first door plate 210, and is mounted on the first part 110 and/or the first door plate 210. The second end 312e of the first holding plate 310e is located between the third part 130 (including the third sub-part 131 and the fourth sub-part 132) and the third door plate 230, and is a free end. A first guide surface 3211e and a second guide surface 3212e in a guide surface 321e of a holding surface 311e are suspended above the slot surface of the avoidance slot 201.

Still refer to FIG. 17. A side that is of the first holding plate 310e and that faces the flexible screen 100 has the holding surface 313e. The holding surface 313e is used to support flexible screen 100. A side that is of the first holding part 320e and that backs on the first holding plate 310e is provided with the guide surface 321e. When the electronic device 1e is switched between the unfolded state and the folded state, the guide surface 321e cooperates with the second door plate 220 and the avoidance slot 201 on the second door plate 220, so that the first holding plate 310e is bent and deformed based on a radian arched from the guide surface 321e, to drive the first holding part 320e to enter and/or fall out of the avoidance slot 201.

Still refer to FIG. 17. In some implementations, the guide surface 321e includes the first guide surface 3211e and the second guide surface 3212e. The first guide surface 3211e is closer to the first end 311e of the first holding plate 310e than the second guide surface 3212e. In the second direction D2, a point on the first guide surface 3211e gradually moves away from a perpendicular bisector of the avoidance slot 201, and a point on the first guide surface 3211e gradually moves toward the perpendicular bisector of the avoidance slot 201. It may be understood that the foregoing implementation shows only one structure of the guide surface, and another structure that can implement a guide function also falls within the protection scope of this application.

With reference to FIG. 17, FIG. 18(a), and FIG. 18(b), it can be learned that, in some embodiments, in the unfolded state, the first holding part 320e is located in the avoidance slot 201, and in the folded state, the first holding part 320e at least partially falls out of the avoidance slot 201. In addition, the holding surface 313e of the first holding plate 310e abuts against a lower surface 0 of the second part 120 under pressure, and the guide surface 321e of the first holding part 320e abuts against a slot surface 0 of the avoidance slot 201 on the second door plate 220 under pressure.

As shown in FIG. 18(b), the second guide surface 3212e in the guide surface 321e abuts against the slot surface 0 of the avoidance slot 201 on the second door plate 220 under pressure, and the first guide surface 3211e falls out of the avoidance slot 201 on the second door plate 220.

In some embodiments, in the folded state, the second end 312e of the first holding plate 310e is still located between the third part 130 (including the third sub-part 131 and the fourth sub-part 132) and the third door plate 230, and is a free end.

In addition, this application further provides a screen holder 300e. It may be understood that the screen holder 300e may be any one of the foregoing screen holders 300e.

In addition, this application further provides a flexible screen assembly. A flexible screen assembly includes the flexible screen 100 and any one of the foregoing first screen holders 300e. The flexible screen 100 and the first screen holder 300e are stacked. The flexible screen 100 includes a first part 110, a second part 120, and a third part 130 that are sequentially connected. In the folded state, the first part 110 and the third part 130 are disposed opposite to each other, and the second part 120 is at least partially located in the avoidance slot 201 on the hinge assembly 200 in the electronic device 1e. The first screen holder 300e includes a first holding plate 310e and a first holding part 320e that are connected to each other. A first end 311e of the first holding plate 310e is connected to the first part 110 and/or the first door plate 210. The first holding part 320e is located on a side that is of the first holding plate 310e and that backs on the flexible screen 100. In the unfolded state, the first holding part 320e is located in the avoidance slot 201; and in the folded state, the first holding part 320e is at least partially located outside the avoidance slot 201.

### Application scenario 3

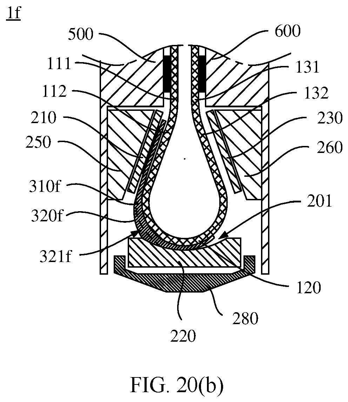

FIG. 19 is a side view of a first screen holder 300f according to some embodiments of this application. FIG. 20(a) is a sectional view of an electronic device 1f in an unfolded state according to some embodiments of this application. FIG. 20(b) is a sectional view of the electronic device 1f in a folded state according to some embodiments of this application.

With reference to FIG. 19, FIG. 20(a), and FIG. 20(b), it is not difficult to find that this application provides an electronic device 1f. In some embodiments, the electronic device 1f includes a flexible screen 100, a hinge assembly 200, a first screen holder 300f, a first housing 500, and a second housing 600. By comparing FIG. 19 with FIG. 17(a), comparing FIG. 20(a) with FIG. 18(a), and comparing FIG. 20(b) with FIG. 18(b) respectively, it is not difficult to find that compared with that of the electronic device 1e, a structure of a screen holder in the electronic device 1f is changed.

As shown in FIG. 19, the first screen holder 300f includes a first holding plate 310f and a first holding part 320f, and the first holding part 320f is configured to be disposed opposite to the avoidance slot 201 on the second door plate 220. The first holding plate 310f includes a first end 311f and a second end 312f that are opposite to each other. The first holding part 320f is mounted at the second end 312f of the first holding plate 310f.

With reference to FIG. 19, FIG. 20(a), and FIG. 20(b), it can be learned that, the first end 311e of the first holding plate 310e is located between the first part 110 (including the first sub-part 111 and the second sub-part 112) and the first door plate 210, and is mounted on the first part 110 (including the first sub-part 111 and the second sub-part 112) and/or the first door plate 210. The second end 312f of the first holding plate 310e is located between the second part 120 and the second door plate 220, and is a free end.

Still refer to FIG. 19. A side that is of the first holding plate 310f and that faces the flexible screen 100 has a holding surface 313f. The holding surface 313f is used to support flexible screen 100. A side that is of the first holding part 320f and that backs on the first holding plate 310f is provided with a guide surface 321f. As shown in FIG. 19, the guide surface 321f is an arc surface that is arched back to the body. When the electronic device 1f is switched between the unfolded state and the folded state, the guide surface 321f cooperates with the second door plate 220 and the avoidance slot 201 on the second door plate 220, so that the first holding plate 310f is bent and deformed based on a radian arched from the guide surface 321f, to drive the first holding part 320f to enter and/or fall out of the avoidance slot 201. It may be understood that the foregoing implementation shows only one structure of the guide surface, and another structure that can implement a guide function also falls within the protection scope of this application.

With reference to FIG. 19, FIG. 20(a), and FIG. 20(b), it can be learned that, in some embodiments, in the unfolded state, the first holding part 320f is located in the avoidance slot 201, and in the folded state, the first holding part 320f at least partially falls out of the avoidance slot 201. In addition, the holding surface 313f of the first holding plate 310f abuts against a lower surface 0 of the second part 120 under pressure, and the guide surface 321f of the first holding part 320f abuts against a slot surface 0 of the avoidance slot 201 on the second door plate 220 under pressure.

As shown in FIG. 18(b), the second guide surface 3212e in the guide surface 321e abuts against the slot surface 0 of the avoidance slot 201 on the second door plate 220 under pressure, and the first guide surface 3211e falls out of the avoidance slot 201 on the second door plate 220.

In addition, this application further provides a screen holder 300f. It may be understood that the screen holder 300f may be any one of the foregoing screen holders 300f.

In addition, this application further provides a flexible screen assembly. A flexible screen assembly includes the flexible screen 100 and any one of the foregoing first screen holders 300f. The flexible screen 100 and the first screen holder 300f are stacked. The flexible screen 100 includes a first part 110, a second part 120, and a third part 130 that are sequentially connected. In the folded state, the first part 110 and the third part 130 are disposed opposite to each other, and the second part 120 is at least partially located in the avoidance slot 201 on the hinge assembly 200 in the electronic device 1f. The first screen holder 300f includes a first holding plate 310f and a first holding part 320f that are connected to each other. A first end 311f of the first holding plate 310f is connected to the first part 110 and/or the first door plate 210. The first holding part 320f is located on a side that is of the first holding plate 310f and that backs on the flexible screen 100. In the unfolded state, the first holding part 320f is located in the avoidance slot 201; and in the folded state, the first holding part 320f is at least partially located outside the avoidance slot 201.

It should be noted that, in this specification, similar reference numerals and letters in the following accompanying drawings represent similar items. Therefore, once an item is defined in an accompanying drawing, the item does not need to be further defined or interpreted in the foregoing accompanying drawings.

The foregoing describes implementations of this application in specific embodiments, and other advantages and effects of this application may be readily understood by a person skilled in the art from content disclosed in this specification. Although this application is described with reference to some embodiments, it does not mean that a characteristic of this application is limited only to this implementation. On the contrary, a purpose of describing this application with reference to an implementation is to cover another option or modification that may be derived based on claims of this application. This application may be alternatively implemented without using these details. In addition, to avoid confusion or blurring a focus of this application, some specific details are omitted from the description. It should be noted that embodiments in this application and the features in embodiments may be mutually combined in the case of no conflict.

In the descriptions of this application, it should be noted that, directions or location relationships indicated by terms such as "center", "up", "down", "left", "right", "vertical", "horizontal", "inside", "outside", "a circumferential direction", "a radical direction", and "an axial direction" are based on the directions or position relationships shown in the accompanying drawings, and are merely intended to describe this application and simplify the descriptions, but are not intended to indicate or imply that an indicated apparatus or element needs to have a specific direction or be constructed and operated in a specific direction, and therefore cannot be understood as a limitation on this application.

In descriptions of this application, it should be noted that unless otherwise explicitly specified and limited, terms such as "dispose", "mount", "connect", and "attach" should be understood in a broad sense. For example, such terms may indicate a fixed connection, a detachable connection, or an integral connection, may indicate a mechanical connection or an electrical connection, and may indicate a direct connection, an indirect connection through an intermediate medium, or an internal communication between two elements. For a person of ordinary skill in the art, a specific meaning of the foregoing terms in this application may be understood based on a specific situation.

It is clearly that a person skilled in the art can make various modifications and variations to this application without departing from the scope of this application. This application is intended to cover these modifications and variations of this application provided that they fall within the scope of protection defined by the following claims.

## Claims

1. A foldable electronic device, wherein the electronic device is capable of being switched between a folded state and an unfolded state, and comprises:
a flexible screen (100, 100'), wherein the flexible screen (100, 100') comprises a first part (110), a second part (120), and a third part (130) that are sequentially connected, and in the folded state, the first part (110) and the third part (130) are disposed opposite to each other;
a support mechanism, wherein the support mechanism and the flexible screen (100, 100') are stacked, the support mechanism comprises a first support structure including a first housing (500) and a first door plate (210), a second support structure including a main shaft module (240) and a second door plate (220), and a third support structure including a second housing (600) and a third door plate (230), the first support structure is disposed opposite to and fastened to the first part (110), the second support structure is disposed opposite to the second part (120), the third support structure is disposed opposite to and fastened to the third part (130), and the second support structure is provided with an avoidance slot (201, 201') facing the second part (120); and
a first screen holder (300, 300a-f), wherein the first screen holder (300, 300a-f) is located between the flexible screen (100, 100') and the support mechanism, the first screen holder (300, 300a-f) comprises a first holding plate (310, 310a-c, 310e, 310f) and a first holding part (320, 320a-c, 320e, 320f), the first holding part (320, 320a-c, 320e, 320f) is located on a side that is of the first holding plate (310, 310a-c, 310e, 310f) and that backs on the flexible screen (100, 100'), the first holding plate (310, 310a-c, 310e, 310f) comprises a first end (311, 311a, 311b, 311e, 311f) away from the second support structure, and the first end (311, 311a, 311b, 311e, 311f) of the first holding plate (310, 310a-c, 310e, 310f) is connected to the first part (110) and/or the first support structure, wherein
in the unfolded state, the first holding part (320, 320a-c, 320e, 320f) is located in the avoidance slot (201, 201') to support the second part (120); and
in the folded state, the first holding part (320, 320a-c, 320e, 320f) is at least partially located outside the avoidance slot (201, 201'), so that the second part (120) is at least partially located in the avoidance slot (201, 201').

2. The electronic device according to claim 1, wherein
the first part (110) comprises a first sub-part (111) and a second sub-part (112), and the first sub-part (111), the second sub-part (112), and the second part (120) are sequentially connected;
the first support structure comprises the first housing (500) and the first door plate (210) that are rotatably connected, wherein the first housing (500) is disposed opposite to and fastened to the first sub-part (111), and the first door plate (210) is disposed opposite to the second sub-part (112);
the second support structure comprises the second door plate (220) and the main shaft module (240) that backs on a surface of the second door plate (220), the first support structure and the second support structure are switched between the folded state and the unfolded state via the main shaft module (240), and the second door plate (220) is provided with the avoidance slot (201, 201'); and
the first end (311, 311a, 311b, 311e, 311f) of the first holding plate (310, 310a-c, 310e, 310f) is connected to at least one of the first sub-part (111), the second sub-part (112), the first housing (500), and the first door plate (210).

3. The electronic device according to claim 1 or 2, wherein a second end (312, 312a, 312b, 312e, 312f) that is of the first holding plate (310, 310a-c, 310e, 310f) and that is opposite to the first end (311, 311a, 311b, 311e, 311f) is a free end and is located between the second part (120) and the second support structure, and the first holding part (320, 320a-c, 320e, 320f) is mounted on the second end (312, 312a, 312b, 312e, 312f).

4. The electronic device according to claim 3, wherein in the folded state, the second part (120) and the second support structure are spaced from each other.

5. The electronic device according to claim 4, wherein in the unfolded state, the second end (312, 312a, 312b, 312e, 312f) is attached to the flexible screen (100, 100'), and in the folded state, the second end (312, 312a, 312b, 312e, 312f) is separated from the flexible screen (100, 100').

6. The electronic device according to any one of claims 3 to 5, wherein in the folded state, the first screen holder (300, 300a-f) is partially in lap joint with a slot opening of the avoidance slot (201, 201').

7. The electronic device according to any one of claims 1 to 6, wherein in the unfolded state, an orthographic projection of the first holding part (320, 320a-c, 320e, 320f) on a plane on which the flexible screen (100, 100') is located partially overlaps an orthographic projection of the avoidance slot (201, 201') on a distribution plane of the flexible screen (100, 100').

8. The electronic device according to any one of claims 1 to 7, wherein the electronic device further comprises:
a second screen holder (400, 400a, 400b), wherein the second screen holder (400, 400a, 400b) is located between the flexible screen (100, 100') and the support mechanism, the second screen holder (400, 400a, 400b) comprises a second holding plate (410, 410a) and a second holding part (420, 420a), the second holding part (420, 420a) is located on a side that is of the second holding plate (410, 410a) and that backs on the flexible screen (100, 100'), the second holding plate (410, 410a) comprises a third end (411) away from the second support structure, and the third end (411) of the second holding plate (410, 410a) is connected to the third part (130) and/or the third support structure, wherein
in the unfolded state, the second holding part (420, 420a) is located in the avoidance slot (201, 201') to support the second part (120); and
in the folded state, the second holding part (420, 420a) is at least partially located outside the avoidance slot (201, 201'), so that the second part (120) is at least partially located in the avoidance slot (201, 201').

9. The electronic device according to claim 1, wherein a second end (312, 312a, 312b, 312e, 312f) that is of the first holding plate (310, 310a-c, 310e, 310f) and that is opposite to the first end (311, 311a, 311b, 311e, 311f) is a free end and is located between the third part (130) and the third door plate (230), and the first holding part (320, 320a-c, 320e, 320f) is mounted between the first end (311, 311a, 311b, 311e, 311f) and the second end (312, 312a, 312b, 312e, 312f).

10. The electronic device according to any one of claims 1 to 9, wherein a side that is of the first holding part (320, 320a-c, 320e, 320f) and that backs on the first holding plate (310, 310a-c, 310e, 310f) is provided with a guide surface (321, 322, 321a, 321b, 321e, 321f, 3211, 3212, 3211a, 3211e, 3212a, 3212e), and when the electronic device is switched between the unfolded state and the folded state, the guide surface cooperates with a slot surface of the avoidance slot (201, 201'), to limit a direction in which the first holding part (320, 320a-c, 320e, 320f) enters and/or falls out of the avoidance slot (201, 201').

11. The electronic device according to any one of claims 1 to 10, wherein in the unfolded state, a surface that is of the first holding part (320, 320a-c, 320e, 320f) and that faces the avoidance slot (201, 201') is at least partially attached to the slot surface of the avoidance slot (201, 201').

12. The electronic device according to claim 2, wherein a cross section that is of the first holding part (320, 320a-c, 320e, 320f) and that is perpendicular to the main shaft module (240) is sector-shaped and/or rectangular.

13. The electronic device according to any one of claims 1 to 12, wherein the first holding plate (310, 310a-c, 310e, 310f) and the first holding part (320, 320a-c, 320e, 320f) are integrally formed, and a material of each of the first holding plate (310, 310a-c, 310e, 310f) and the first holding part (320, 320a-c, 320e, 320f) comprises at least one of metal, resin, and fiber.

14. The electronic device according to any one of claims 1 to 12, wherein the first holding plate (310, 310a-c, 310e, 310f) and the first holding part (320, 320a-c, 320e, 320f) are separately formed and are fastened to each other, a material of the first holding plate (310, 310a-c, 310e, 310f) comprises at least one of metal, resin, and fiber, and a material of the first holding part (320, 320a-c, 320e, 320f) comprises at least one of metal, resin, and fiber.

15. The electronic device according to any one of claims 1 to 14, further comprising a towing component, wherein one end of the towing component is connected to the first end (311, 311a, 311b, 311e, 311f) of the first holding plate (310, 310a-c, 310e, 310f), the other end of the towing component is connected to the first support structure, and the towing component is configured to: when the electronic device is switched from the folded state to the unfolded state, tow the first holding part (320, 320a-c, 320e, 320f) into the avoidance slot (201, 201').

## Patentansprüche

1. Faltbare elektronische Vorrichtung, wobei die elektronische Vorrichtung dazu in der Lage ist, zwischen einem gefalteten Zustand und einem entfalteten Zustand umgeschaltet zu werden, und Folgendes umfasst:
einen flexiblen Bildschirm (100, 100'), wobei der flexible Bildschirm (100, 100') ein erstes Teil (110), ein zweites Teil (120) und ein drittes Teil (130) umfasst, die nacheinander verbunden sind, und das erste Teil (110) und das dritte Teil (130) in dem gefalteten Zustand einander gegenüberliegen;
einen Stützmechanismus, wobei der Stützmechanismus und der flexible Bildschirm (100, 100') gestapelt sind, der Stützmechanismus Folgendes umfasst: eine erste Stützstruktur, die ein erstes Gehäuse (500) und eine erste Klappenplatte (210) beinhaltet, eine zweite Stützstruktur, die ein Hauptwellenmodul (240) und eine zweite Klappenplatte (220) beinhaltet, und eine dritte Stützstruktur, die ein zweites Gehäuse (600) und eine dritte Klappenplatte (230) beinhaltet, die erste Stützstruktur gegenüber dem ersten Teil (110) angeordnet und an diesem befestigt ist, die zweite Stützstruktur gegenüber dem zweiten Teil (120) angeordnet ist, die dritte Stützstruktur gegenüber dem dritten Teil (130) angeordnet und an diesem befestigt ist und die zweite Stützstruktur mit einem dem zweiten Teil (120) zugewandten Ausweichschlitz (201, 201') bereitgestellt ist; und
einen ersten Bildschirmhalter (300, 300a-f), wobei sich der erste Bildschirmhalter (300, 300a-f) zwischen dem flexiblen Bildschirm (100, 100') und dem Stützmechanismus befindet, der erste Bildschirmhalter (300, 300a-f) eine erste Halteplatte (310, 310a-c, 310e, 310f) und ein erstes Halteteil (320, 320a-c, 320e, 320f) umfasst, sich das erste Halteteil (320, 320a-c, 320e, 320f) auf einer Seite der ersten Halteplatte (310, 310a-c, 310e, 310f) befindet, die an dem flexiblen Bildschirm (100, 100') anliegt, die erste Halteplatte (310, 310a-c, 310e, 310f) ein erstes Ende (311, 311a, 311b, 311e, 311f) umfasst, das von der zweiten Stützstruktur abgewandt ist, und das erste Ende (311, 311a, 311b, 311e, 311f) der ersten Halteplatte (310, 310a-c, 310e, 310f) mit dem ersten Teil (110) und/oder der ersten Stützstruktur verbunden ist, wobei sich das erste Halteteil (320, 320a-c, 320e, 320f) in dem entfalteten Zustand in dem Ausweichschlitz (201, 201') befindet, um das zweite Teil (120) zu stützen; und
sich das erste Halteteil (320, 320a-c, 320e, 320f) in dem gefalteten Zustand mindestens teilweise außerhalb des Ausweichschlitzes (201, 201') befindet, sodass sich das zweite Teil (120) mindestens teilweise innerhalb des Ausweichschlitzes (201, 201') befindet.

2. Elektronische Vorrichtung nach Anspruch 1, wobei
das erste Teil (110) ein erstes Unterteil (111) und ein zweites Unterteil (112) umfasst und das erste Unterteil (111), das zweite Unterteil (112) und das zweite Teil (120) nacheinander verbunden sind;
die erste Stützstruktur das erste Gehäuse (500) und die erste Klappenplatte (210) umfasst, die drehbar verbunden sind, wobei das erste Gehäuse (500) gegenüber dem ersten Unterteil (111) angeordnet und an diesem befestigt ist und die erste Klappenplatte (210) gegenüber dem zweiten Unterteil (112) angeordnet ist;
die zweite Stützstruktur die zweite Klappenplatte (220) und das Hauptwellenmodul (240) umfasst, das an einer Oberfläche der zweiten Klappenplatte (220) anliegt, die erste Stützstruktur und zweite Stützstruktur über das Hauptwellenmodul (240) zwischen dem gefalteten Zustand und dem entfalteten Zustand umgeschaltet werden und die zweite Klappenplatte (220) mit dem Ausweichschlitz (201, 201') bereitgestellt ist; und
das erste Ende (311, 311a, 311b, 311e, 311f) der ersten Halteplatte (310, 310a-c, 310e, 310f) mit mindestens einem von dem ersten Unterteil (111), dem zweiten Unterteil (112), dem ersten Gehäuse (500) und der ersten Klappenplatte (210) verbunden ist.

3. Elektronische Vorrichtung nach Anspruch 1 oder 2, wobei ein zweites Ende (312, 312a, 312b, 312e, 312f) der ersten Halteplatte (310, 310a-c, 310e, 310f), das dem ersten Ende (311, 311a, 311b, 311e, 311f) gegenüberliegt, ein freies Ende ist und sich zwischen dem zweiten Teil (120) und der zweiten Stützstruktur befindet und das erste Halteteil (320, 320a-c, 320e, 320f) an dem zweiten Ende (312, 312a, 312b, 312e, 312f) montiert ist.

4. Elektronische Vorrichtung nach Anspruch 3, wobei das zweite Teil (120) und die zweite Stützstruktur in dem gefalteten Zustand voneinander beabstandet sind.

5. Elektronische Vorrichtung nach Anspruch 4, wobei das zweite Ende (312, 312a, 312b, 312e, 312f) in dem entfalteten Zustand an dem flexiblen Bildschirm (100, 100') angebracht ist und das zweite Ende (312, 312a, 312b, 312e, 312f) in dem gefalteten Zustand von dem flexiblen Bildschirm (100, 100') getrennt ist.

6. Elektronische Vorrichtung nach einem der Ansprüche 3 bis 5, wobei der erste Bildschirmhalter (300, 300a-f) in dem gefalteten Zustand teilweise mit einer Schlitzöffnung des Ausweichschlitzes (201, 201') überlappt.

7. Elektronische Vorrichtung nach einem der Ansprüche 1 bis 6, wobei eine orthografische Projektion des ersten Halteteils (320, 320a-c, 320e, 320f) auf eine Ebene, auf der sich der flexible Bildschirm (100, 100') befindet, in dem entfalteten Zustand eine orthografische Projektion des Ausweichschlitzes (201, 201') auf eine Verteilungsebene des flexiblen Bildschirms (100, 100') teilweise überlappt.

8. Elektronische Vorrichtung nach einem der Ansprüche 1 bis 7, wobei die elektronische Vorrichtung ferner Folgendes umfasst:
einen zweiten Bildschirmhalter (400, 400a, 400b), wobei sich der zweite Bildschirmhalter (400, 400a, 400b) zwischen dem flexiblen Bildschirm (100, 100') und dem Stützmechanismus befindet, der zweite Bildschirmhalter (400, 400a, 400b) eine zweite Halteplatte (410, 410a) und ein zweites Halteteil (420, 420a) umfasst, sich das zweite Halteteil (420, 420a) auf der Seite der zweiten Halteplatte (410, 410a) befindet, die an dem flexiblen Bildschirm (100, 100') anliegt, die zweite Halteplatte (410, 410a) ein drittes Ende (411) umfasst, das von der zweite Stützstruktur abgewandt ist, und das dritte Ende (411) der zweiten Halteplatte (410, 410a) mit dem dritten Teil (130) und/oder der dritten Stützstruktur verbunden ist, wobei
sich das zweite Halteteil (420, 420a) in dem entfalteten Zustand in dem Ausweichschlitz (201, 201') befindet, um das zweite Teil (120) zu stützen; und
sich das zweite Halteteil (420, 420a) in dem gefalteten Zustand mindestens teilweise außerhalb des Ausweichschlitzes (201, 201') befindet, sodass sich das zweite Teil (120) mindestens teilweise innerhalb des Ausweichschlitzes (201, 201') befindet.

9. Elektronische Vorrichtung nach Anspruch 1, wobei ein zweites Ende (312, 312a, 312b, 312e, 312f) der ersten Halteplatte (310, 310a-c, 310e, 310f), das dem ersten Ende (311, 311a, 311b, 311e, 311f) gegenüberliegt, ein freies Ende ist und sich zwischen dem dritten Teil (130) und der dritten Klappenplatte (230) befindet und das erste Halteteil (320, 320a-c, 320e, 320f) zwischen dem ersten Ende (311, 311a, 311b, 311e, 311f) und dem zweiten Ende (312, 312a, 312b, 312e, 312f) montiert ist.

10. Elektronische Vorrichtung nach einem der Ansprüche 1 bis 9, wobei eine Seite des ersten Halteteils (320, 320a-c, 320e, 320f), die an der ersten Halteplatte (310, 310a-c, 310e, 310f) anliegt, mit einer Führungsfläche (321, 322, 321a, 321b, 321e, 321f, 3211, 3212, 3211a, 3211e, 3212a, 3212e) bereitgestellt ist und beim Umschalten der elektronischen Vorrichtung zwischen dem entfalteten Zustand und dem gefalteten Zustand die Führungsfläche mit einer Nutfläche des Ausweichschlitzes (201, 201') zusammenwirkt, um eine Richtung zu begrenzen, in der das erste Halteteil (320, 320a-c, 320e, 320f) in den Ausweichschlitz (201, 201') eingeführt wird und/oder aus diesem herausfällt.

11. Elektronische Vorrichtung nach einem der Ansprüche 1 bis 10, wobei eine Oberfläche des ersten Halteteils (320, 320a-c, 320e, 320f), die dem Ausweichschlitz (201, 201') zugewandt ist, in dem entfalteten Zustand mindestens teilweise an der Schlitzoberfläche des Ausweichschlitzes (201, 201') angebracht ist.

12. Elektronische Vorrichtung nach Anspruch 2, wobei ein Querschnitt des ersten Halteteils (320, 320a-c, 320e, 320f), der senkrecht zu dem Hauptwellenmodul (240) ist, sektorförmig und/oder rechteckig ist.

13. Elektronische Vorrichtung nach einem der Ansprüche 1 bis 12, wobei die erste Halteplatte (310, 310a-c, 310e, 310f) und das erste Halteteil (320, 320a-c, 320e, 320f) einstückig gebildet sind und das Material von jedem von der ersten Halteplatte (310, 310a-c, 310e, 310f) und dem ersten Halteteil (320, 320a-c, 320e, 320f) mindestens eines von Metall, Harz oder Faser umfasst.

14. Elektronische Vorrichtung nach einem der Ansprüche 1 bis 12, wobei die erste Halteplatte (310, 310a-c, 310e, 310f) und das erste Halteteil (320, 320a-c, 320e, 320f) getrennt gebildet sind und aneinander befestigt sind, ein Material der ersten Halteplatte (310, 310a-c, 310e, 310f) mindestens eines von Metall, Harz und Faser umfasst und ein Material des ersten Halteteils (320, 320a-c, 320e, 320f) mindestens eines von Metall, Harz und Faser umfasst.

15. Elektronische Vorrichtung nach einem der Ansprüche 1 bis 14, ferner umfassend eine Zugkomponente, wobei ein Ende der Zugkomponente mit dem ersten Ende (311, 311a, 311b, 311e, 311f) der ersten Halteplatte (310, 310a, 310b, 310e, 310f) verbunden ist, das andere Ende der Zugkomponente mit der ersten Stützstruktur verbunden ist und die Zugkomponente konfiguriert ist, um beim Umschalten der elektronischen Vorrichtung aus dem gefalteten Zustand in den entfalteten Zustand das erste Halteteil (320, 320a-c, 320e, 320f) in den Ausweichschlitz (201, 201') zu ziehen.

## Revendications

1. Dispositif électronique pliable, dans lequel le dispositif électronique peut être commuté entre un état plié et un état déplié, et comprend :
un écran flexible (100, 100'), dans lequel l'écran flexible (100, 100') comprend une première partie (110), une deuxième partie (120) et une troisième partie (130) qui sont connectées séquentiellement, et à l'état plié, la première partie (110) et la troisième partie (130) sont disposées face à face ;
un mécanisme de support, dans lequel le mécanisme de support et l'écran flexible (100, 100') sont empilés, le mécanisme de support comprend une première structure de support comportant un premier boîtier (500) et une première plaque de porte (210), une deuxième structure de support comportant un module d'arbre principal (240) et une deuxième plaque de porte (220), et une troisième structure de support comportant un second boîtier (600) et une troisième plaque de porte (230), la première structure de support est disposée en face de la première partie (110) et fixée à celle-ci, la deuxième structure de support est disposée en face de la deuxième partie (120), la troisième structure de support est disposée en face de la troisième partie (130) et fixée à celle-ci, et la deuxième structure de support est munie d'une fente d'évitement (201, 201') faisant face à la deuxième partie (120) ; et
un premier support d'écran (300, 300a-f), dans lequel le premier support d'écran (300, 300a-f) est situé entre l'écran flexible (100, 100') et le mécanisme de support, le premier support d'écran (300, 300a-f) comprend une première plaque de maintien (310, 310a-c, 310e, 310f) et une première partie de maintien (320, 320a-c, 320e, 320f), la première partie de maintien (320, 320a-c, 320e, 320f) est située sur un côté qui est de la première plaque de maintien (310, 310a-c, 310e, 310f) et qui s'appuie sur l'écran flexible (100, 100'), la première plaque de maintien (310, 310a-c, 310e, 310f) comprend une première extrémité (311, 311a, 311b, 311e, 311f) éloignée de la deuxième structure de support, et la première extrémité (311, 311a, 311b, 311e, 311f) de la première plaque de maintien (310, 310a-c, 310e, 310f) est connectée à la première partie (110) et/ou à la première structure de support, dans lequel
à l'état déplié, la première partie de maintien (320, 320a-c, 320e, 320f) est située dans la fente d'évitement (201, 201') pour supporter la deuxième partie (120) ; et
à l'état plié, la première partie de maintien (320, 320a-c, 320e, 320f) est au moins partiellement située à l'extérieur de la fente d'évitement (201, 201'), de sorte que la deuxième partie (120) est au moins partiellement située dans la fente d'évitement (201, 201').

2. Dispositif électronique selon la revendication 1, dans lequel la première partie (110) comprend une première sous-partie (111) et une seconde sous-partie (112), et la première sous-partie (111), la seconde sous-partie (112) et la deuxième partie (120) sont connectées séquentiellement ;
la première structure de support comprend le premier boîtier (500) et la première plaque de porte (210) qui sont connectés en rotation, dans lequel le premier boîtier (500) est disposé en face de la première sous-partie (111) et fixé à celle-ci, et la première plaque de porte (210) est disposée en face de la seconde sous-partie (112) ;
la deuxième structure de support comprend la deuxième plaque de porte (220) et le module d'arbre principal (240) qui s'appuie sur une surface de la deuxième plaque de porte (220), la première structure de support et la deuxième structure de support sont commutées entre l'état plié et l'état déplié par le biais du module d'arbre principal (240), et la deuxième plaque de porte (220) est munie de la fente d'évitement (201, 201') ; et
la première extrémité (311, 311a, 311b, 311e, 311f) de la première plaque de maintien (310, 310a-c, 310e, 310f) est connectée à au moins l'un de la première sous-partie (111), de la seconde sous-partie (112), du premier boîtier (500) et de la première plaque de porte (210).

3. Dispositif électronique selon la revendication 1 ou 2, dans lequel une deuxième extrémité (312, 312a, 312b, 312e, 312f) qui est de la première plaque de maintien (310, 310a-c, 310e, 310f) et qui est opposée à la première extrémité (311, 311a, 311b, 311e, 311f) est une extrémité libre et est située entre la deuxième partie (120) et la deuxième structure de support, et la première partie de maintien (320, 320a-c, 320e, 320f) est montée sur la deuxième extrémité (312, 312a, 312b, 312e, 312f).

4. Dispositif électronique selon la revendication 3, dans lequel, à l'état plié, la deuxième partie (120) et la deuxième structure de support sont espacées l'une de l'autre.

5. Dispositif électronique selon la revendication 4, dans lequel, à l'état déplié, la deuxième extrémité (312, 312a, 312b, 312e, 312f) est fixée à l'écran flexible (100, 100'), et à l'état plié, la deuxième extrémité (312, 312a, 312b, 312e, 312f) est séparée de l'écran flexible (100, 100').

6. Dispositif électronique selon l'une quelconque des revendications 3 à 5, dans lequel, à l'état plié, le premier support d'écran (300, 300a-f) est partiellement joint à recouvrement avec une ouverture de fente de la fente d'évitement (201, 201').

7. Dispositif électronique selon l'une quelconque des revendications 1 à 6, dans lequel, à l'état déplié, une projection orthographique de la première partie de maintien (320, 320a-c, 320e, 320f) sur un plan sur lequel l'écran flexible (100, 100') est situé chevauche partiellement une projection orthographique de la fente d'évitement (201, 201') sur un plan de distribution de l'écran flexible (100, 100').

8. Dispositif électronique selon l'une quelconque des revendications 1 à 7, dans lequel le dispositif électronique comprend également :
un second support d'écran (400, 400a, 400b), dans lequel le second support d'écran (400, 400a, 400b) est situé entre l'écran flexible (100, 100') et le mécanisme de support, le second support d'écran (400, 400a, 400b) comprenant une seconde plaque de maintien (410, 410a) et une seconde partie de maintien (420, 420a), la seconde partie de maintien (420, 420a) est située sur un côté qui est de la seconde plaque de maintien (410, 410a) et qui s'appuie sur l'écran flexible (100, 100'), la seconde plaque de maintien (410, 410a) comprenant une troisième extrémité (411) éloignée de la deuxième structure de support, et la troisième extrémité (411) de la seconde plaque de maintien (410, 410a) est connectée à la troisième partie (130) et/ou à la troisième structure de support, dans lequel
à l'état déplié, la seconde partie de maintien (420, 420a) est située dans la fente d'évitement (201, 201') pour supporter la deuxième partie (120) ; et
à l'état plié, la seconde partie de maintien (420, 420a) est au moins partiellement située à l'extérieur de la fente d'évitement (201, 201'), de sorte que la deuxième partie (120) est au moins partiellement située dans la fente d'évitement (201, 201').

9. Dispositif électronique selon la revendication 1, dans lequel une deuxième extrémité (312, 312a, 312b, 312e, 312f) qui est de la première plaque de maintien (310, 310a-c, 310e, 310f) et qui est opposée à la première extrémité (311, 311a, 311b, 311e, 311f) est une extrémité libre et est située entre la troisième partie (130) et la troisième plaque de porte (230), et la première partie de maintien (320, 320a-c, 320e, 320f) est montée entre la première extrémité (311, 311a, 311b, 311e, 311f) et la deuxième extrémité (312, 312a, 312b, 312e, 312f).

10. Dispositif électronique selon l'une quelconque des revendications 1 à 9, dans lequel un côté qui est de la première partie de maintien (320, 320a-c, 320e, 320f) et qui s'appuie sur la première plaque de maintien (310, 310a-c, 310e, 310f) est muni d'une surface de guidage (321, 322, 321a, 321b, 321e, 321f, 3211, 3212, 3211a, 3211e, 3212a, 3212e), et lorsque le dispositif électronique est commuté entre l'état déplié et l'état plié, la surface de guidage coopère avec une surface de fente de la fente d'évitement (201, 201') afin de limiter une direction dans laquelle la première partie de maintien (320, 320a-c, 320e, 320f) entre et/ou sort de la fente d'évitement (201, 201').

11. Dispositif électronique selon l'une quelconque des revendications 1 à 10, dans lequel, à l'état déplié, une surface qui est de la première partie de maintien (320, 320a-c, 320e, 320f) et qui fait face à la fente d'évitement (201, 201') est au moins partiellement attachée à la surface de fente de la fente d'évitement (201, 201').

12. Dispositif électronique selon la revendication 2, dans lequel une section transversale qui est de la première partie de maintien (320, 320a-c, 320e, 320f) et qui est perpendiculaire au module d'arbre principal (240) est de forme sectorielle et/ou rectangulaire.

13. Dispositif électronique selon l'une quelconque des revendications 1 à 12, dans lequel la première plaque de maintien (310, 310a-c, 310e, 310f) et la première partie de maintien (320, 320a-c, 320e, 320f) sont formées d'un seul tenant, et un matériau de chacune de la première plaque de maintien (310, 310a-c, 310e, 310f) et de la première partie de maintien (320, 320a-c, 320e, 320f) comprend au moins l'un d'un métal, d'une résine et d'une fibre.

14. Dispositif électronique selon l'une quelconque des revendications 1 à 12, dans lequel la première plaque de maintien (310, 310a-c, 310e, 310f) et la première partie de maintien (320, 320a-c, 320e, 320f) sont formées séparément et sont fixées l'une à l'autre, un matériau de la première plaque de maintien (310, 310a-c, 310e, 310f) comprend au moins l'un d'un métal, d'une résine et d'une fibre, et un matériau de la première partie de maintien (320, 320a-c, 320e, 320f) comprend au moins l'un d'un métal, d'une résine et d'une fibre.

15. Dispositif électronique selon l'une quelconque des revendications 1 à 14, comprenant également un élément de traction, dans lequel une extrémité de l'élément de traction est connectée à la première extrémité (311, 311a, 311b, 311e, 311f) de la première plaque de maintien (310, 310a, 310b, 310e, 310f), l'autre extrémité de l'élément de traction est connectée à la première structure de support, et l'élément de traction est configuré pour : lorsque le dispositif électronique est commuté de l'état plié à l'état déplié, tirer la première partie de maintien (320, 320a-c, 320e, 320f) dans la fente d'évitement (201, 201').
